# EUROPEAN PATENT APPLICATION

(11) **EP 4 607 673 A1**
(43) Date of publication of application: **27.08.2025**
(21) Application number: 22969907.9
(22) Date of filing: 31.12.2022
(51) Int. Cl.: H01M 50/249, B60L 50/60

(54) **BATTERY MODULE, VEHICLE, AND BATTERY SWAPPING STATION**

(71) Applicant: Contemporary Amperex Technology Co., Limited, Ningde, Fujian 352100 (CN)
(72) Inventor: CHAN, Libing, Ningde, Fujian 352100 (CN); CAO, Gen, Ningde, Fujian 352100 (CN); LIU, Bin, Ningde, Fujian 352100 (CN); JIANG, Yuwei, Ningde, Fujian 352100 (CN)
(74) Representative: Gong, Jinping
(86) International application number: PCT/CN2022/144393
(87) International publication number: WO 2024/138767

(57) **Abstract**

Provided are a battery assembly, a vehicle, and a battery swapping station. The battery assembly includes a plurality of batteries. Each of the plurality of batteries has a mounting structure. Each of the plurality of batteries is adapted to be disposed at a bottom of a vehicle and detachably connected to the vehicle through the mounting structure, allowing each of the plurality of batteries to be detachably mounted to the vehicle separately.

## Description

### FIELD

The present disclosure relates to the field of battery technologies, and more particularly, to a battery assembly, a vehicle, and a battery swapping station.

### BACKGROUND

A new energy vehicle in the related art is mounted with a whole large battery pack. When battery swapping is needed, it is necessary to replace a whole battery pack. There is often a phenomenon where the battery pack is replaced without being deeply discharged, resulting in power waste. Moreover, a dimension of the whole large battery pack is large, making battery swapping more difficult and battery swapping efficiency lower.

### SUMMARY

Embodiments of the present disclosure provide a battery assembly, a vehicle, and a battery swapping station, which can be compatible with various scenarios.

In a first aspect, an embodiment of the present disclosure provides a battery assembly including a plurality of batteries. Each of the plurality of batteries has a mounting structure. Each of the plurality of batteries is adapted to be disposed at a bottom of a vehicle and detachably connected to the vehicle through the mounting structure, allowing each of the plurality of batteries to be detachably mounted to the vehicle separately.

In the above technical solution, a corresponding number of batteries can be matched according to different application scenarios, different mileage, different configurations of the vehicle, and the like, which improves battery swapping flexibility, such that the battery assembly according to the embodiments of the present disclosure can be compatible with different vehicle models and application scenarios. Moreover, there is no need to mount all batteries to the vehicle, reducing a load on the vehicle. In addition, since each battery can be separately disassembled and replaced, a battery that has been deeply discharged can be disassembled and replaced, thereby avoiding a problem of power waste of the battery caused by replacement of the battery without deep discharge. Moreover, since a dimension of a single battery can be relatively small, battery swapping difficulty is lowered, and battery swapping efficiency is improved.

In some embodiments, at least one of the plurality of batteries is a first battery including two first portions. The two first portions are adapted to be respectively disposed at two transverse sides of a vehicle-bottom longitudinal beam of the vehicle. Each of the two first portions has a top surface higher than a bottom surface of the vehicle-bottom longitudinal beam and includes at least one first battery cell.

In some embodiments, a top surface of the at least one first battery cell accommodated in each of the two first portions is adapted to be higher than a height center of the vehicle-bottom longitudinal beam; and/or a top wall of each of the two first portions is adapted to be lower than a top surface of the vehicle-bottom longitudinal beam.

In some embodiments, the mounting structure includes a first mounting structure disposed at each of the two first portions. The first mounting structure is located between the first portion and an outer side surface of the vehicle-bottom longitudinal beam.

In some embodiments, the first mounting structure includes a plurality of sub-mounting portions arranged at intervals in a longitudinal direction.

In some embodiments, a longitudinal dimension L4 of each of the two first portions is smaller than a transverse dimension L5 of the first battery.

In some embodiments, the two first portions are symmetrically arranged.

In some embodiments, each of the two first portions includes one first battery layer or a plurality of first battery layers arranged in a vertical direction. The one first battery layer or each of the plurality of first battery layers includes a plurality of first battery units arranged in parallel, and each of the plurality of first battery units includes the at least one first battery cell.

In some embodiments, the first battery further includes a second portion connected to the two first portions. A top surface of the second portion is lower than the top surface of each of the two first portions to define a recess between the first portion and the two second portions. The recess is adapted to accommodate the vehicle-bottom longitudinal beam.

In some embodiments, the top surface of the second portion is adapted to be lower than the vehicle-bottom longitudinal beam; and the top surface of the second portion has a first docking structure. The first docking structure is adapted to be extended between two longitudinal beams of the vehicle-bottom longitudinal beam, and the first docking structure is configured to dock with the vehicle to allow for current conduction and/or liquid conduction.

In some embodiments, a docking surface of the first docking structure faces upwards to allow for docking in a vertical direction; or a docking surface of the first docking structure faces horizontally to allow for docking in a horizontal direction.

In some embodiments, the first docking structure is located at a longitudinal central position of the first battery.

In some embodiments, the second portion further includes at least one first battery cell.

In some embodiments, the second portion includes one first battery layer or a plurality of first battery layers arranged in a vertical direction. The one first battery layer or each of the plurality of first battery layers includes a plurality of first battery units arranged in parallel, and each of the plurality of first battery units includes the at least one first battery cell.

In some embodiments, each of the two first portions further includes one first battery layer or a plurality of first battery layers arranged in the vertical direction; and a total height H4 of the at least one first battery cell accommodated in the first portion is greater than a total height H3 of the at least one first battery cell accommodated in the second portion.

In some embodiments, each of at least two batteries of the plurality of batteries is the first battery. All the first batteries are adapted to be sequentially arranged in a longitudinal direction of the vehicle.

In some embodiments, an avoidance gap is defined between two adjacent ones of the first batteries.

In some embodiments, each of the first batteries has the same specification; or at least two of the first batteries have different specifications.

In some embodiments, at least one of the plurality of batteries is a second battery. The second battery is adapted to be located at a single transverse side of the vehicle-bottom longitudinal beam, and the second battery has a top surface higher than a bottom surface of the vehicle-bottom longitudinal beam and includes at least one second battery cell.

In some embodiments, the mounting structure includes a second mounting structure disposed at the second battery. The second mounting structure is located between the second battery and an outer side surface of the vehicle-bottom longitudinal beam.

In some embodiments, the second battery includes one second battery layer or a plurality of second battery layers arranged in a vertical direction. The one second battery layer or each of the plurality of second battery layers includes a plurality of second battery units arranged in parallel, and each of the plurality of second battery units includes the at least one second battery cell.

In some embodiments, at least one of the plurality of batteries is a third battery including a third portion and a fourth portion. Each of the third portion and the fourth portion includes at least one third battery cell. One fourth portion is provided and disposed at a transverse side of the third portion; a top surface of the fourth portion is higher than a top surface of the third portion; the top surface of the third portion is adapted to be lower than a bottom surface of the vehicle-bottom longitudinal beam; the third portion is adapted to be located below the vehicle-bottom longitudinal beam of the vehicle; the fourth portion is adapted to be located at a single transverse side of the vehicle-bottom longitudinal beam; and the top surface of the fourth portion is adapted to be higher than the bottom surface of the vehicle-bottom longitudinal beam.

In some embodiments, the mounting structure includes a third mounting structure disposed at the third portion and/or the fourth portion. The third mounting structure is located between the third battery and the vehicle-bottom longitudinal beam.

In some embodiments, the third portion has a second docking structure disposed at the top surface of the third portion. The second docking structure is adapted to be extended between two longitudinal beams of the vehicle-bottom longitudinal beam, and the second docking structure is configured to dock with the vehicle to allow for current conduction and/or liquid conduction.

In some embodiments, each of the third portion and the fourth portion includes one third battery layer or a plurality of third battery layers arranged in a vertical direction. The one third battery layer or each of the plurality of third battery layers includes a plurality of third battery units arranged in parallel. Each of the plurality of third battery units includes the at least one third battery cell; and a total height H6 of the at least one third battery cell accommodated in the fourth portion is greater than a total height H5 of the at least one third battery cell accommodated in the third portion.

In some embodiments, at least two batteries of the plurality of batteries are different in at least one of capacitance, shape, and size.

In some embodiments, each of the plurality of batteries has a same specification.

In some embodiments, the plurality of batteries is connected in series and/or in parallel.

In some embodiments, each of the plurality of batteries has an electrically conductive connector adapted to be in current conduction with the vehicle or with an adjacent one of the plurality of batteries.

In some embodiments, the electrically conductive connector is located at a top surface of each of the plurality of batteries and has a docking surface facing upwards.

In some embodiments, each of the plurality of batteries has a fluid conduction connector adapted to be in fluid conduction with the vehicle or with an adjacent one of the plurality of batteries.

In some embodiments, the fluid conduction connector is located at a top surface of each of the plurality of batteries and has a docking surface facing upwards.

In some embodiments, the mounting structure is adapted to be detachably mounted at a vehicle-bottom longitudinal beam of the vehicle; and the mounting structure is located at a side of each of the plurality of batteries facing towards the vehicle-bottom longitudinal beam.

In some embodiments, at least two batteries of the plurality of batteries are arranged in a longitudinal direction of the vehicle-bottom longitudinal beam; and/or at least two batteries of the plurality of batteries are respectively disposed at two transverse sides of the vehicle-bottom longitudinal beam.

In a second aspect, an embodiment of the present disclosure provides a vehicle, including a vehicle-bottom longitudinal beam and the battery as described above.

In a third aspect, an embodiment of the present disclosure provides a battery swapping station, configured to replace a battery for the vehicle as described above.

In some embodiments, the battery swapping station includes a battery swapping region. The vehicle is adapted to replace the battery in the battery swapping region. The battery swapping region includes a first region and a second region. The first region is adapted to be located directly below the battery. The second region is configured to support a front wheel and a rear wheel that are adjacent to the battery, and a ground at the first region is flush with a ground at the second region.

### BRIEF DESCRIPTION OF THE DRAWINGS

In order to explain technical solutions of embodiments of the present disclosure more clearly, accompanying drawings needing to be used in the embodiments will be briefly described below. It should be understood that the following drawings illustrate only some embodiments of the present disclosure and therefore should not be construed as limiting the scope of the present disclosure. Based on these drawings, other related drawings can be obtained by those of ordinary skill in the art without creative effort.
FIG. 1 is a schematic view of a vehicle according to some embodiments of the present disclosure.
FIG. 2 is an assembly view of a battery assembly and a vehicle-bottom longitudinal beam according to some embodiments of the present disclosure.
FIG. 3 is an assembled top view of the battery assembly and the vehicle-bottom longitudinal beam shown in FIG. 2.
FIG. 4 is an assembled side view of the battery assembly and vehicle-bottom longitudinal beam shown in FIG. 2.
FIG. 5 is an exploded view of a battery and a vehicle-bottom longitudinal beam according to some embodiments of the present disclosure.
FIG. 6 is an exploded view of a battery according to some embodiments of the present disclosure.
FIG. 7 is a perspective view of a first battery according to some embodiments of the present disclosure.
FIG. 8 is a front view of the first battery shown in FIG. 7.
FIG. 9 is an assembled view of the first battery and the vehicle-bottom longitudinal beam shown in FIG. 8.
FIG. 10 is a cross-sectional view of the first battery shown in FIG. 7.
FIG. 11 is a top view of the first battery shown in FIG. 7.
FIG. 12 is an assembly view of a second battery and a third battery and a vehicle-bottom longitudinal beam according to some embodiments of the present disclosure.
FIG. 13 is an assembly view of a third battery and a third battery and a vehicle-bottom longitudinal beam according to some embodiments of the present disclosure.
FIG. 14 is a schematic plane view of a battery swapping station according to some embodiments of the present disclosure.

### Reference numerals:

vehicle 1000; battery assembly 100; battery 1; recess 10; first battery 11; first portion 11a; second portion 11b; second battery 12; third battery 13; third portion 13a; fourth portion 13b; battery layer 2; first battery layer 21; second battery layer 22; third battery layer 23; battery unit 3; first battery unit 31; second battery unit 32; third battery unit 33; battery cell 4; first battery cell 41; second battery cell 42; third battery cell 43; housing 5; mounting structure 6; sub-mounting portion 61; first mounting structure 62; second mounting structure 63; third mounting structure 64; electrically conductive connector 741; fluid conduction connector 742; first docking structure 75; second docking structure 76; temperature adjustment plate 8; first adjustment plate 81; second adjustment plate 82; third adjustment plate 83; fourth adjustment plate 84; fifth adjustment plate 85; first common horizontal plate 861; second common horizontal plate 862; vehicle-bottom longitudinal beam 200; longitudinal beam 201; connection structure 300; front wheel 400; rear wheel 500; battery swapping station 2000; battery swapping region 600; first region 601; second region 602; transverse direction Y; longitudinal direction X; vertical direction Z.

### DETAILED DESCRIPTION

In order to make the purpose, technical solution and advantages of embodiments of the present disclosure clearer, the following will provide a clear description of the technical solution in the embodiments of the present disclosure in combination with the accompanying drawings in the embodiments of the present disclosure. Obviously, the described embodiments are some of the embodiments of the present disclosure, rather than all of them. Based on the embodiments of the present disclosure, all other embodiments obtained by those skilled in the art without any inventive effort fall within the scope of the present disclosure.

Unless otherwise defined, all technical and scientific terms used herein have the same meaning as commonly understood by those skilled in the art of the present disclosure. Terms in a specification of the present disclosure herein are only used for the purpose of describing specific embodiments, and are not intended to limit the present disclosure. The terms "including", "having" and any variation thereof in the description and claims of the present disclosure and in the preceding description of the drawings are intended to cover non-exclusive inclusion. In the description and claims of the present disclosure or in the preceding description of the drawings, the terms "first", "second" and the like are used to distinguish different objects, rather than describing a particular order or a primary and secondary relation.

In the present disclosure, reference to "embodiment" means that a particular feature, structure, or characteristic described in conjunction with the embodiment may be included in at least one embodiment of the present disclosure. The presence of the term at each place in the description does not necessarily refer to the same embodiment, nor does it refer to a separate or alternative embodiment that is mutually exclusive of other embodiments.

In the description of the present disclosure, it should be noted that, unless otherwise clearly specified and limited, terms such as "connected" and "connected to" should be understood in a broad sense. For example, it may be a fixed connection or a detachable connection or connection as one piece; or a direct connection or an indirect connection through an intermediate. For those of ordinary skill in the art, the specific meaning of the above terms in the present disclosure should be understood according to specific circumstances.

In the present disclosure, the term "and/or" only represents a relationship between correlated objects, including three relationships. For example, "A and/or B" may mean three situations: A only, B only, or both A and B. In addition, the character "/" in the present disclosure generally represents an "or" relationship between the correlated objects preceding and succeeding the character.

In the embodiments of the present disclosure, the same reference numerals denote the same components, and a detailed description of the same components is omitted in different embodiments for the sake of brevity. It is to be understood that the thickness, length, width and other dimensions of the various components in the embodiments of the present disclosure illustrated in the drawings, as well as the overall thickness, length, width, and other dimensions of the integrated device, are illustrative only and should not be construed to limit the present disclosure in any way.

The term "a plurality of" as used herein refers to two or more (including two).

The battery cell in the present disclosure may include a lithium ion secondary battery, a lithium ion primary battery, a lithium sulfur battery, a sodium lithium ion battery, a sodium ion battery or a magnesium ion battery, etc., which are not limited in the embodiments of the present disclosure. The battery cell may be in a shape of a cylinder, a flat body, a cuboid shape or other shapes, which are not limited in the embodiments of the present disclosure. The battery cell is generally divided into three types based on a packaging method: a cylinder-shaped battery cell, a square-shaped battery cell and a soft-pack battery cell, which are not limited in the embodiment of the present disclosure.

The battery mentioned in the embodiments of the present disclosure refers to a single physical module including one or more battery cells to provide a higher voltage and capacity. The battery in the embodiments of the present disclosure includes a housing for packaging one or more battery cells or a plurality of battery modules. The housing can prevent liquid or other foreign matter from affecting charging or discharging of the battery cell.

In the battery, a plurality of battery cells may be connected in series or in parallel or in series and parallel. The expression "in series and parallel" means that the plurality of battery cells is connected both in series and in parallel. The plurality of battery cells may be directly connected in series or in parallel or in series and parallel, and then accommodated in the housing as a whole. Of course, for the battery, the plurality of battery cells may be connected in series or in parallel or in series and parallel to form a battery module, and then a plurality of battery modules may be connected in series or in parallel or in series and parallel and accommodated in the housing as a whole. In addition, the battery may further have other structures. For example, the battery may further include a busbar configured to implement an electrical connection between the plurality of battery cells.

The battery cell includes a packaging housing, an electrode assembly, and an electrolyte. The packaging housing is configured to accommodate the electrode assembly and the electrolyte. The electrode assembly consists of a positive electrode plate, a negative electrode plate and a separator. Operation of the battery cell primarily relies on a movement of metallic ions between the positive and negative electrode plates. The positive electrode plate includes a positive current collector and a positive electrode active material layer. The positive electrode active material layer is coated at a surface of the positive current collector. A part of the positive current collector that is not coated with the positive electrode active material layer protrudes from a part of the positive current collector that has been coated with the positive electrode active material layer. The part of the positive current collector that is not coated with the positive active material layer serves as a positive electrode tab. A lithium-ion battery is taken as an example, a material of the positive current collector may be aluminum, and a positive electrode active material may be lithium cobalt oxide, lithium iron phosphate, ternary lithium or lithium manganate, etc. The negative electrode plate includes a negative current collector and a negative electrode active material layer. The negative electrode active material layer is coated at a surface of the negative current collector. A part of the negative current collector that is not coated with the negative electrode active material layer protrudes from a part of the negative current collector that has been coated with the negative electrode active material layer. The part of the negative current collector that is not coated with the negative electrode active material layer serves as a negative electrode tab. A material of the negative current collector may be copper, and a negative electrode active material may be carbon, silicon, etc. For ensuring no fusing during passing through a high current, a plurality of positive electrode tabs is provided and stacked together, and a plurality of negative electrode tabs is provided and stacked together. In addition, the electrode assembly may have a winding structure or a laminated structure, and the embodiments of the present disclosure are not limited thereto.

In recent years, new energy vehicles have developed by leaps and bounds. In the field of electric vehicles, batteries play an irreplaceable and important role as a power source of electric vehicles. As a core component of new energy vehicles, batteries have high requirements in terms of safety and cycle service life.

The inventor finds that a vehicle is generally mounted with a whole large battery pack. When battery swapping is needed, it is necessary to replace a whole battery pack. There is often a phenomenon where the battery pack is replaced without being deeply discharged, resulting in power waste. Moreover, a dimension of the whole large battery pack is large, making battery swapping more difficult and battery swapping efficiency lower.

Based on the above considerations, the inventor has designed a battery assembly through in-depth research, including a plurality of batteries that can be separately disassembled and replaced relative to the vehicle, so that a corresponding number of batteries can be matched according to different application scenarios, different mileage, different configurations of the vehicle, and the like, thereby improving a battery swapping flexibility, enabling the battery assembly according to the embodiments of the present disclosure to be compatible with different vehicle models and application scenarios. Moreover, there is no need to mount all batteries to the vehicle, reducing a load of the vehicle. In addition, since each battery can be separately disassembled and replaced, the battery that has been deeply discharged can be disassembled and replaced, thereby avoiding the problem of power waste of the battery caused by replacement of the battery 1 without deep discharge. Moreover, since a dimension of a single battery can be relatively small, battery swapping difficulty is lowered, and battery swapping efficiency is improved.

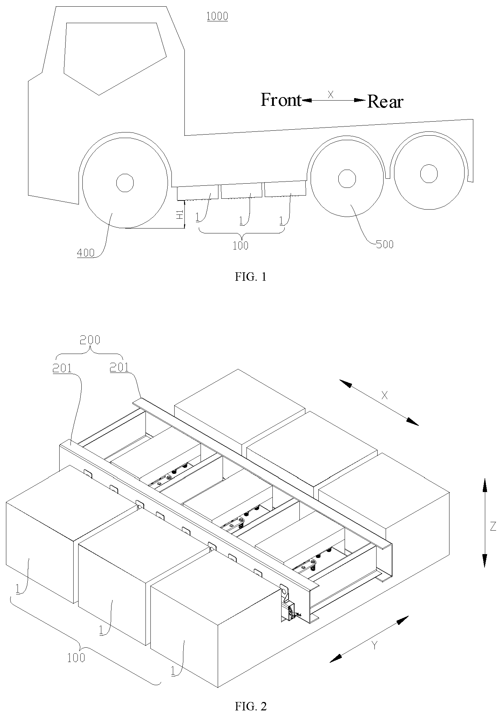

FIG. 1 is a schematic structural view of a vehicle 1000 according to some embodiments of the present disclosure. With reference to FIG. 1, the vehicle 1000 may be a fuel vehicle, a gas vehicle or a new energy vehicle. The new energy vehicle may be a pure electric vehicle, a hybrid vehicle or an extended-range vehicle, etc. The battery 1 may be configured to supply power to the vehicle 1000. For example, the battery 1 may serve as an operating power source for the vehicle 1000. The vehicle 1000 may also include a controller and a motor. The controller is configured to control the battery 1 to supply power to the motor, for example, to satisfy operational power consumption requirements for starting, navigation and driving of the vehicle 1000. In some embodiments of the present disclosure, the battery 1 can not only serve as an operating power supply of the vehicle 1000, but also can serve as a drive power supply of the vehicle 1000 to replace or partially replace fuel or natural gas to provide driving power for the vehicle 1000.

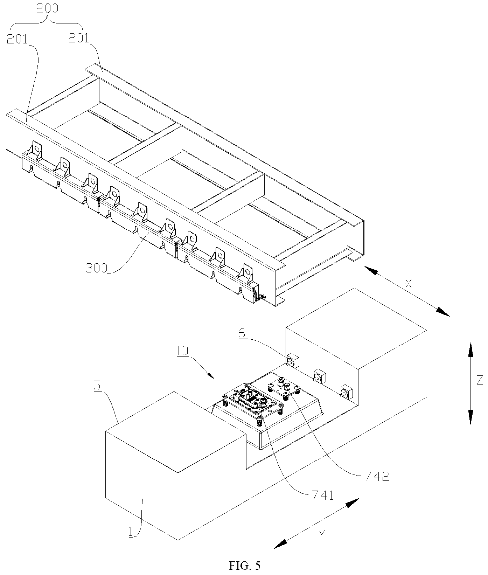

As shown in FIG. 2 to FIG. 4, the battery assembly 100 includes a plurality of batteries 1. In combination with FIG. 5, each battery 1 has a mounting structure 6. With reference to FIG. 1, the battery 1 is adapted to be disposed at a bottom of the vehicle 1000 and detachably connected to the vehicle 1000 through a mounting structure 6, so that each of the plurality of batteries 1 is detachably mounted to the vehicle 1000 separately.

In the above embodiment, an arrangement manner of the plurality of batteries 1 in the battery assembly 100 is not limited. For example, at least two batteries 1 are arranged in a longitudinal direction of the vehicle 1000 or in a transverse direction of the vehicle 1000, or in a vertical direction of the vehicle 1000.

In the present disclosure, a "longitudinal direction" refers to a length direction of the vehicle 1000 (like an X direction marked in the drawings) or a front-rear direction of the vehicle 1000; a "transverse direction" refers to a width direction of the vehicle 1000 (like a Y direction marked in the drawings) or a left-right direction of the vehicle 1000; and a "vertical direction" refers to a height direction of the vehicle 1000 (like a Z direction marked in the drawings) or an up-down direction of the vehicle 1000.

In the above embodiment, an arrangement position of the battery assembly 100 at the bottom of the vehicle 1000 is not limited. For example, in the longitudinal direction, the battery assembly 100 may be located at a front part or a rear part or a middle part of the bottom of the vehicle 1000. For example, in the transverse direction, the battery assembly 100 may be located in the center of the bottom of the vehicle 1000 or at two sides of the center of the bottom of the vehicle 1000.

In the above embodiment, each battery 1 has a mounting structure 6, and the battery 1 can be detachably connected to the vehicle 1000 through the mounting structure 6, so that separate mounting and disassembly of each battery 1 relative to the vehicle 1000 can be realized, i.e., when any one battery 1 is detached from the vehicle 1000, a connection relationship between any one of the rest of batteries 1 and the vehicle 1000 is not affected.

The battery in the related art has no mounting structure. When such a battery is mounted to the vehicle, the battery needs to be loaded into a battery swapping frame containing the battery first, and then the battery swapping frame is locked and attached to the vehicle. Because of the introduction of the battery swapping frame, the required mounting space is made large, and a volume energy density of the battery is difficult to be improved in a case where a space of the vehicle bottom is limited.

With the battery 1 according to the embodiments of the present disclosure, the mounting structure 6 is disposed on the battery 1 and is detachably connected to the vehicle 1000, so that the battery 1 can be mounted to the vehicle 1000 by using the mounting structure 6, to realize the mounting of the battery 1 to the vehicle 1000. Therefore, a battery swapping frame used for accommodating the battery in the related art is omitted, and a mounting space proportion of the battery swapping frame is reduced. Further, the volume energy density of the battery 1 can be increased. Moreover, since the battery swapping frame is omitted, the cost can be reduced, a load of the whole vehicle can be reduced, and battery swapping efficiency can be improved. Moreover, design requirements of a matched battery-swapping transport vehicle for battery swapping for volume and load-bearing of the battery are lowered, making the design of the battery-swapping transport vehicle less difficult and less costly.

In addition, because the battery in the related art is mounted by using the battery swapping frame, in order to ensure an energy density of the battery, a height of the battery swapping frame above the ground is low. When the ground has a protrusion, the battery swapping frame is easily bumped, resulting in damage to the battery. For the battery 1 according to the embodiments of the present disclosure, since the battery swapping frame is omitted, a height of a lower part of the battery 1 above the ground is improved, which lowers the risk of hitting and injuring the battery 1 due to the protrusion on the ground, and improves use safety and service life of the battery 1. Moreover, because of the improvement of the height of the lower part of the battery 1 above the ground, there is thus sufficient space to facilitate a battery swapping operation.

Moreover, since the battery swapping frame is omitted, a space of the battery 1 above the ground can be increased. In some cases, a battery swapping station 2000 does not need to be trenched, and the vehicle 1000 does not need to be lifted, so that battery swapping can be realized. In short, whole vehicle lifting or trench digging requirement can be cancelled, so that a site arrangement of the battery swapping station 2000 can be simplified, and a space utilization rate is increased.

In the above embodiment, since the battery assembly 100 includes a plurality of batteries 1, and the plurality of batteries 1 may be separately detached and replaced relative to the vehicle 1000, so that the corresponding number of batteries 1 can be matched according to different application scenarios, different mileage, different configurations of the vehicle, and the like, thereby improving the battery swapping flexibility. In this way, the battery assembly 100 according to the embodiments of the present disclosure can be compatible with different vehicle models and application scenarios. It can even be possible to develop a kind of battery assembly 100 that can cover more than 70% of vehicle models in the industry. Moreover, since there is no need to match a single battery pack for a vehicle model, adaptability of the battery swapping station is improved, so that a number of the battery swapping stations can be reduced, a distance between adjacent battery swapping stations is increased, and an input cost is lowered.

For example, a large heavy truck can use six batteries 1 while a tractor only needs to use three batteries 1 and a small truck only needs to use two batteries 1. Moreover, there is also a need to take into account the mileage requirement. For example, the tractor can run 300 kilometers to 500 kilometers with three batteries 1, but if the mileage requirement from 300 kilometers to 500 kilometers is not needed, then two batteries 1 or one battery 1 can be considered for use.

Moreover, there is no need to mount all batteries 1 to the vehicle 1000, reducing the load of the vehicle 1000. In addition, since each battery 1 can be separately disassembled and replaced, the battery 1 that has been deeply discharged can be disassembled and replaced, thereby avoiding the problem of power waste of the battery 1 caused by the replacement of the battery 1 without deep discharge.

In addition, compared with the solution of the whole large battery pack, since the battery assembly 100 in the present disclosure includes a plurality of batteries 1, each battery 1 can be relatively low in dimension and can be separately replaced during battery swapping, such that a throughput of the battery swapping station 2000 in a same space can be significantly increased. Moreover, since the single battery 1 has a small dimension, deformation of the battery 1 can be reduced, which is conducive to an improvement in an assembly success rate of the battery 1. Moreover, the battery swapping difficulty of the single battery 1 can be lowered, and the battery swapping efficiency can be improved.

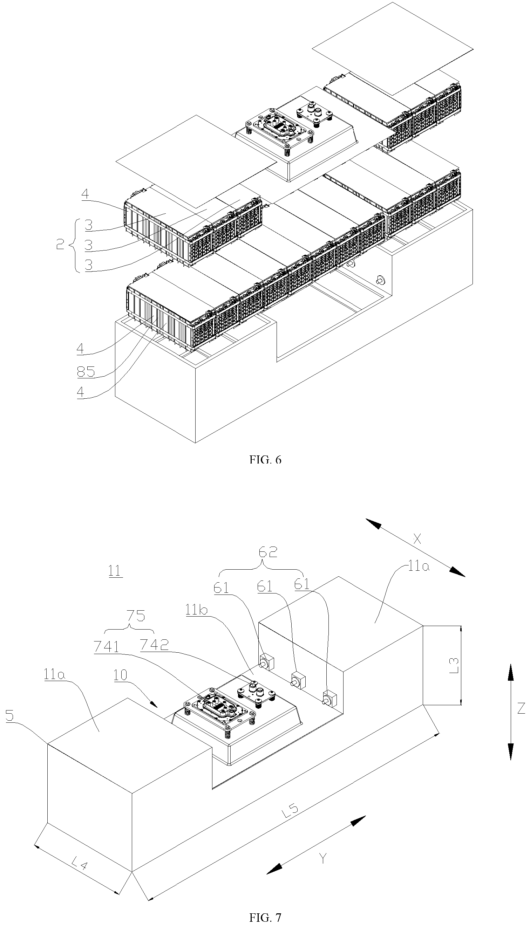

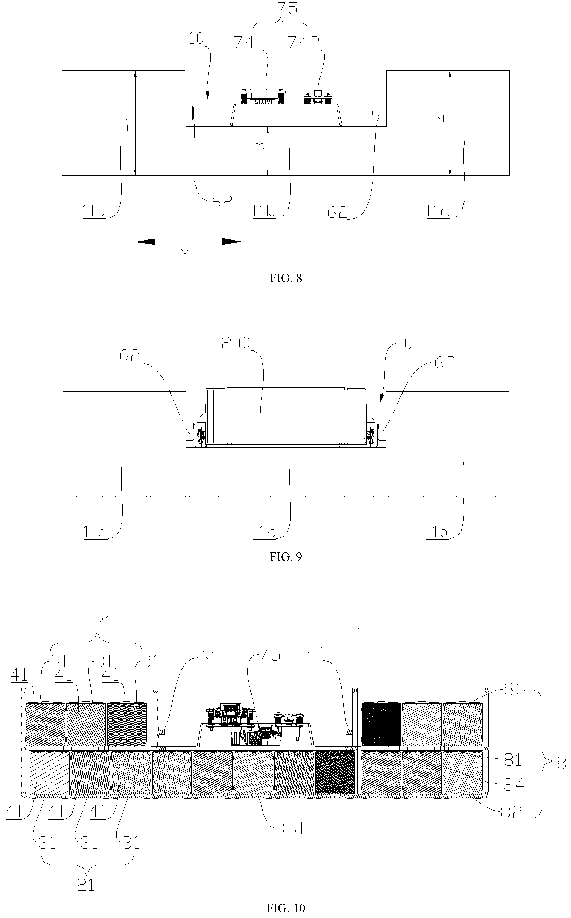

In some embodiments, as shown in FIG. 7 to FIG. 11, at least one of the plurality of batteries 1 is a first battery 11 including two first portions 11a. The two first portions 11a are adapted to be respectively disposed at two transverse sides of a vehicle-bottom longitudinal beam 200 of the vehicle 1000. Each of the two first portions 11a has a top surface higher than a bottom surface of the vehicle-bottom longitudinal beam 200. In combination with FIG. 10, each of the first portions 11a includes at least one first battery cell 41.

In the above embodiment, the top surface of the first portion 11a is higher than the bottom surface of the vehicle-bottom longitudinal beam 200, and a bottom surface of the first portion 11a may be lower than, flush with, or higher than the bottom surface of the vehicle-bottom longitudinal beam 200, so that the first portion 11a is located at a transverse side of the vehicle-bottom longitudinal beam 200 to utilize a space of the position. Therefore, the first battery 11 can fully utilize a space at each of the two transverse sides of the vehicle-bottom longitudinal beam 200 to provide a larger number of first battery cells 41, thereby ensuring that an energy density of the first battery 11 is high, or that the first battery cell 41 originally required to be arranged at a bottom layer of the first battery 11 can be transferred to two transverse sides of the vehicle-bottom longitudinal beam 200. Therefore, a height of the first battery 11 above ground can be further improved. It can be ensured that enough space is reserved between a bottom of the first battery 11 and the ground for the battery swapping operation. Moreover, because of an improvement in the height of the first battery 11 above the ground, risks of hitting and scratching of the bottom of the first battery 11 due to the protrusions of the ground and the like can be reduced, and use safety and a service life of the first battery 11 are improved. In summary, the first battery 11 with the above structure can effectively solve the problem of low space utilization, which is beneficial to an improvement in safety and reliability of the first battery 11 and battery swapping of the first battery 11.

In some embodiments, a top surface of the at least one first battery cell 41 accommodated in each of the two first portions 11a (i.e., a top surface of the highest first battery cell 41 in the first portion 11a) is adapted to be higher than a height center of the vehicle-bottom longitudinal beam 200, so that the space at the two transverse sides of the vehicle-bottom longitudinal beam 200 can be fully utilized for providing the first battery cell 41, and the energy density of the battery 1 is improved. In addition, a top wall of the first portion 11a may be lower than the top surface of the vehicle-bottom longitudinal beam 200, so that problems of collision and the like can be avoided.

In some embodiments, as shown in FIG. 7 to FIG. 11, the mounting structure 6 includes a first mounting structure 62 disposed at each of the two first portions 11a. The first mounting structure 62 is located between the first portion 11a and an outer side surface of the vehicle-bottom longitudinal beam 200, i.e., the first mounting structure 62 on the first portion 11a is disposed at an inner side wall of the first portion 11a, i.e., at a side of the first portion 11a facing towards an outer side surface of the vehicle-bottom longitudinal beam 200.

Therefore, since the first mounting structure 62 is disposed at each first portion 11a, the first battery 11 may have mounting points at both sides of the vehicle-bottom longitudinal beam 200. In this way, when the first portion 11a at each side is connected to the vehicle 1000 through the first mounting structure 62, connection stability and connection reliability of the first battery 11 can be improved.

Moreover, since the first mounting structure 62 on the first portion 11a is located between the first portion 11a and the outer side surface of the vehicle-bottom longitudinal beam 200, a position of the first mounting structure 62 is hidden, and the first mounting structure 62 can be protected, such that the first mounting structure 62 is prevented from being bumped and damaged, improving mounting reliability of the battery 1. Moreover, the occurrence of a problem that the first mounting structure 62 cannot be detached and replaced and the like, which are caused by corrosion on the first mounting structure 62 by splashed muddy water during the operation of the vehicle 1000, can be avoided.

In addition, in the related art, when the battery is mounted by using the battery swapping frame, a plurality of locking-attachment structures is arranged at a frame outer peripheral position of the battery swapping frame, i.e., the locking-attachment structure is located at a side of the battery away from the vehicle-bottom longitudinal beam and bears a great torque, and the mounting reliability of the battery is low. With the battery 1 according to the embodiments of the present disclosure, since the first mounting structure 62 on the first portion 11a is located between the first portion 11a and the outer side surface of the vehicle-bottom longitudinal beam 200, i.e., the first mounting structure 62 is located at a side of the first battery 11 close to the vehicle-bottom longitudinal beam 200, the first mounting structure 62 bears a small torque, and mounting reliability of the first battery 11 is high.

In addition, in the related art, since the locking-attachment structure is located at the side of the battery away from the vehicle-bottom longitudinal beam, and a distance between locking-attachment structures at two transverse sides is large, it is difficult to ensure relative position precision of the plurality of locking-attachment structures. During the battery replacement, since the relative position precision of the plurality of locking-attachment structures is low, the plurality of locking-attachment structures is difficult to quickly and accurately implement respective alignment, such that battery swapping difficulty is high, and the battery swapping efficiency is low.

With the battery 1 according to the embodiments of the present disclosure, since the first mounting structure 62 on the first portion 11a is located between the first portion 11a and the outer side surface of the vehicle-bottom longitudinal beam 200, i.e., the first mounting structure 62 is located at the side of the first battery 11 close to the vehicle-bottom longitudinal beam 200, a distance between the first mounting structures 62 on the two first portions 11a is small, such that relative position precision of the first mounting structures 62 at the two transverse sides of the vehicle-bottom longitudinal beam 200 can be easily improved, lowering processing difficulty. Moreover, during the replacement of the first battery 11, since the relative position precision of the first mounting structures 62 at the two sides is high, the first mounting structures 62 at the two sides can easily implement respective alignment, thereby lowering the battery swapping difficulty and improving the battery swapping efficiency.

In some embodiments, as shown in FIG. 7 to FIG. 11, the first mounting structure 62 on the first portion 11a located between the first portion 11a and the outer side surface of the vehicle-bottom longitudinal beam 200 may be configured to be detachably connected to the vehicle-bottom longitudinal beam 200. Therefore, a structural design can be simplified, and the mounting efficiency can be improved.

It should be noted that a connection manner of the first mounting structure 62 and the vehicle-bottom longitudinal beam 200 is not limited. It can be that the first mounting structure 62 is directly connected to a part of the vehicle-bottom longitudinal beam 200 facing towards the first mounting structure 62, or that the first mounting structure 62 is indirectly connected to a connection structure 300 which is disposed on the vehicle-bottom longitudinal beam 200 and faces towards the first mounting structure 62. In addition, it should be noted that a connection position of the first mounting structure 62 and the vehicle-bottom longitudinal beam 200 is not limited. For example, the first mounting structure 62 may be connected to at least one of a top part, a bottom part, and a side part of the vehicle-bottom longitudinal beam 200.

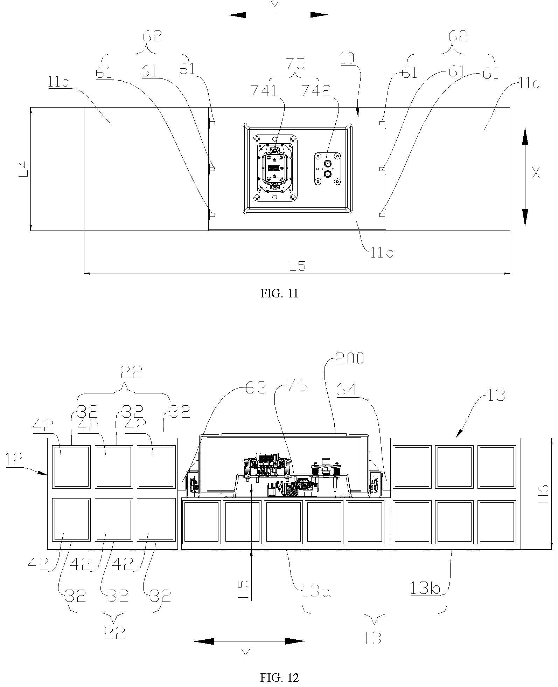

In some embodiments, as shown in FIG. 7 and FIG. 11, the first mounting structure 62 includes a plurality of sub-mounting portions 61 arranged at intervals in a longitudinal direction.

Therefore, it is beneficial to an enhancement in dispersibility and uniformity of stress distribution, settlement of a problem of stress concentration of the sub-mounting portion 61, an improvement in connection reliability of each sub-mounting portion 61, and a further enhancement in mounting stability and reliability of the first battery 11. In addition, since the plurality of sub-mounting portions 61 are each located between the first portion 11a and the outer side surface of the vehicle-bottom longitudinal beam 200, distances between the plurality of sub-mounting portions 61 on the two first portions 11a are small, so that relative position precision of the plurality of sub-mounting portions 61 can be easily improved, lowering the processing difficulty. Moreover, when the first battery 11 is replaced, since the relative position precision of the plurality of sub-mounting portions 61 is high, the plurality of sub-mounting portions 61 can easily implement respective alignment, thereby reducing the battery swapping difficulty and improving the battery swapping efficiency.

In some embodiments, two or three sub-mounting portions 61 included in each first mounting structure 62 are provided. Specifically, since the battery assembly 100 includes a plurality of batteries 1 each having a small size, the number of the sub-mounting portions 61 can be relatively reduced, for example, can be 2, 3, or the like, so that stress of each sub-mounting portion 61 can be better reduced, and the mounting reliability of the first battery 11 is ensured. Moreover, the relative position precision of the plurality of sub-mounting portions 61 can be easily controlled, alignment and mounting of each sub-mounting portion 61 and the vehicle 1000 can be easily realized, the mounting difficulty is reduced, and the mounting efficiency is improved.

In some embodiments, as shown in FIG. 11, a longitudinal dimension L4 of each of the two first portions 11a is smaller than a transverse dimension L5 of the first battery 11, i.e., the transverse dimension L5 of the first battery 11 is large, and the longitudinal dimension L5 of the first portion 11a is small. When the transverse dimension L5 of the first battery 11 cannot exceed a transverse width of the vehicle 1000, it can be ensured that the longitudinal dimension L4 of the first portion 11a is not too large and that the size of the first battery 11 is small. Therefore, the number of the sub-mounting portions 61 can be relatively reduced, so that the stress of each sub-mounting portion 61 can be better reduced, and the mounting reliability of the first battery 11 is ensured. In addition, the relative position precision of the plurality of sub-mounting portions 61 can be easily controlled, so that the alignment and mounting of each sub-mounting portion 61 and the vehicle 1000 are easily realized, lowering the mounting difficulty and improving the mounting efficiency.

In some embodiments, as shown in FIG. 7 to FIG. 11, the two first portions 11a are symmetrically arranged, i.e., a first portion 11a at one transverse side of the vehicle-bottom longitudinal beam 200 and a first portion 11a at another one transverse side of the vehicle-bottom longitudinal beam 200 are the same and symmetrically arranged. Therefore, it is beneficial to realization of gravity center balance of the two sides of the first battery 11, so that the stress of each first mounting structure 62 is relatively balanced, and the mounting reliability of the first battery 11 is improved. Moreover, since the two first portions 11a are symmetrically arranged, design and processing of the first battery 11 can be simplified, the cost can be reduced, and production efficiency can be improved.

In some embodiments, as shown in FIG. 7 to FIG. 10, each of the two first portions 11a includes one first battery layer 21 or a plurality of first battery layers 21 arranged in a vertical direction. A plurality of first battery units 31 are equal in height and are arranged in parallel to form one first battery layer 21, and the first battery unit 31 includes at least one first battery cell 41.

In the above embodiment, the first portion 11a may include only one first battery layer 21, or the first portion 11a may further include the plurality of first battery layers 21, and the plurality of first battery layers 21 are arranged in the vertical direction.

In the above embodiment, when the first battery unit 31 includes a plurality of first battery cells 41, it indicates that the plurality of first battery units 31 may be arranged in groups, which is beneficial to modular production, improves production efficiency, and is beneficial to simplification of current conduction and the like. When the first battery unit 31 only includes one first battery cell 41, it indicates that the plurality of first battery units 31 are not arranged in groups, so that a fixed plate used for group arrangement and the like can be omitted, thereby saving space occupation and improving the energy density of the first battery 11.

In the above embodiment, the plurality of first battery units 31 are arranged regularly with equal height in a horizontal direction to form the first battery layer 21. For example, the plurality of first battery units 31 are sequentially arranged in the transverse direction, or the plurality of first battery units 31 are sequentially arranged in the longitudinal direction, or a plurality of battery 1 modules are arranged in a plurality of rows and columns along the transverse direction and the longitudinal direction. In addition, the plurality of first battery units 31 may be connected in series, in parallel, or in parallel and in series.

Therefore, since the first portion 11a includes one first battery layer 21 or a plurality of first battery layers 21 arranged in the vertical direction, which is beneficial to control on a height of the first portion 11a. For example, when the height of the first portion 11a needs to be high, the requirement can be satisfied by increasing a layer height or a number of layers of the first battery layer 21. When the height of the first portion 11a needs to be low, the requirements can be satisfied by reducing the layer height or the number of layers of the first battery layer 21. Moreover, several first battery layers 21 with different layer heights may be combined, so that the height of the first portion 11a satisfies the requirement.

In some embodiments, as shown in FIG. 7 to FIG. 10, the first battery 11 further includes a second portion 11b. The second portion 11b is connected to the two first portions 11a. A top surface of the second portion 11b is lower than the top surface of each of the two first portions 11a to define a recess 10 between the first portion 11a and the two second portions 11b. The recess 10 is adapted to accommodate the vehicle-bottom longitudinal beam 200.

Therefore, the two first portions 11a are connected by providing the second portion 11b, so that the two first portions 11a and the second portion 11b of the first battery 11 form a whole, which is beneficial to simultaneous mounting of the two first portions 11a and an improvement in mounting efficiency of the first battery 11. Moreover, since the top surface of the second portion 11b is lower than the top surface of the first portion 11a, the second portion 11b can be allowed to avoid the vehicle-bottom longitudinal beam 200 from below the vehicle-bottom longitudinal beam 200. In this way, the mounting of the first battery 11 can be performed in a manner of lifting the first battery 11 upwards. During lifting, the second portion 11b does not interfere with the vehicle-bottom longitudinal beam 200. When the first battery 11 is removed from the vehicle 1000, the first battery 11 can be pulled down. In the process of pulling down the first battery 11, the second portion 11b does not interfere with the vehicle-bottom longitudinal beam 200, thereby simplifying a structure of the first battery 11 and facilitating the mounting and disassembly of the first battery 11 to the vehicle 1000.

It should be noted that "the recess 10 being adapted to accommodate the vehicle-bottom longitudinal beam 200" means that the vehicle-bottom longitudinal beam 200 is at least partially extended into the recess 10 but is not completely located in the recess 10. More specifically, it can be that a segment of the vehicle-bottom longitudinal beam 200 in the longitudinal direction is extended into the recess 10, and it can further be that the segment is partially or completely extended into the recess 10 in the vertical direction. In addition, it should be noted that a housing of the first portion 11a and a housing of the second portion 11b may be integrally formed or separately formed, which is not limited herein.

In some embodiments, as shown in FIG. 7 to FIG. 11, the top surface of the second portion 11b is adapted to be lower than the vehicle-bottom longitudinal beam 200, and the top surface of the second portion 11b has a first docking structure 75. The first docking structure 75 is adapted to be extended between two longitudinal beams 201 of the vehicle-bottom longitudinal beam 200, and the first docking structure 75 is configured to dock with the vehicle 1000 to allow for current conduction and/or liquid conduction.

In the above embodiment, the first docking structure 75 that may dock with the vehicle 1000 is disposed on the second portion 11b to allow for current conduction or liquid conduction or simultaneously current conduction and liquid conduction. For example, when the first docking structure 75 implements current conduction, current transmission between the vehicle 1000 and the battery 1 can be implemented, to implement power supply for the vehicle 1000 by the battery 1, control of the vehicle 1000 to the battery 1, and the like. For example, when the first docking structure 75 implements liquid conduction, heat transfer between a refrigerating medium system of the vehicle 1000 and the battery 1 may be implemented, to adjust a temperature of the battery 1 by using the refrigerating medium system, to improve operation reliability and safety of the battery 1, or waste heat of the battery 1 is absorbed by using the refrigerating medium system to meet a heat source requirement of a heat-pump air-conditioning system of the vehicle 1000, and details are omitted herein.

In the above embodiment, when the top surface of the second portion 11b is lower than the vehicle-bottom longitudinal beam 200, it is indicated that any position of the top surface of the second portion 11b is not higher than the bottom surface of the vehicle-bottom longitudinal beam 200 when the first battery 11 and the vehicle 1000 are mounted in place, so that a sufficient space is reserved above the second portion 11b for providing the first docking structure 75. Since the first docking structure 75 is disposed on the top surface of the second portion 11b, the space in the recess 10 is utilized for providing the first docking structure 75. In this way, on the one hand, the first docking structure 75 can be protected by the recess 10, such that the first docking structure 75 can be prevented from being bumped and damaged and prevented from being out of operation caused by being corroded by splashed muddy water during the operation of the vehicle 10000. On the other hand, the first docking structure 75 can be prevented from occupying a space at an outer side of the first battery 11, which is further beneficial to an improvement in the energy density of the first battery 11.

In the above embodiment, the vehicle-bottom longitudinal beam 200 may include two longitudinal beams 201 arranged in parallel. The two longitudinal beams 201 each extend into the recess 10, and the first docking structure 75 may extend into a space between the two longitudinal beams 201. In this way, the first docking structure 75 can be prevented from occupying other spaces more effectively, and the energy density of the first battery 11 can be further improved by using the saved space.

In some embodiments, as shown in FIG. 7 and FIG. 8, a docking surface of the first docking structure 75 faces upwards to allow for docking in a vertical direction. Therefore, when the first battery 11 is mounted, the first battery 11 can be lifted upwards, and the first docking structure 75 can be docked upwards in place. When the first battery 11 is disassembled, the first battery 11 is pulled downwards, and the first docking structure 75 can be disengaged downwards from its docking. In this way, a battery swapping operation of the first battery 11 is simplified, and battery swapping efficiency of the first battery 11 is improved. In addition, a movement space required for docking in this manner is small, which can save space occupation caused by docking, and is beneficial to the improvement of the energy density of the first battery 11.

In some embodiments, a docking surface of the first docking structure 75 faces horizontally to allow for docking in a horizontal direction. Therefore, when the first battery 11 is mounted, the first battery 11 may be lifted up first, and then be pushed horizontally (for example, be pushed horizontally forwards or backwards) to complete docking, to meet different design requirements.

In some embodiments, in combination with FIG. 10 and FIG. 11, the first docking structure 75 is located at a longitudinal central position of the first battery 11. Therefore, by longitudinally centering the first docking structure 75, a connection of the first battery cell 41 or a temperature adjustment plate 8 in the first battery 11 with the first docking structure 75 is facilitated, which simplifies a connection path of the first docking structure 75 and saves a space required by the connection path, so that more first battery cells 41 or first battery cells 41 with greater volumes can be arranged in the first battery 11, thereby improving the energy density of the first battery 11. In addition, by longitudinally centering the first docking structure 75, it is beneficial that a center of gravity of the first battery 11 in the longitudinal direction is centered, so that stress distribution of each of first mounting structures 62 on the first battery 11 is uniform, which improves problems of the stress concentration of the first mounting structure 62 and the like, and improves the connection reliability and stability of the first battery 11 and the vehicle-bottom longitudinal beam 200.

In some embodiments, in combination with FIG. 10 and FIG. 11, the first docking structure 75 may be located at a transversely central position of a top of the first battery 11. Therefore, by transversely centering the first docking structure 75, the connection of the first battery cell 41 or the temperature adjustment plate 8 in the first battery 11 with the first docking structure 75 is facilitated, which simplifies the connection path of the first docking structure 75 and saves the space required by the connection path, so that more first battery cells 41 or first battery cells 41 with greater volumes can be arranged in the first battery 11, thereby improving the energy density of the first battery 11. In addition, by transversely centering the first docking structure 75, it is beneficial that a center of gravity of the first battery 11 in the transverse direction is centered, so that the stress distribution of each of the first mounting structures 62 on the first battery 11 is uniform, which improves the problems of the stress concentration of the first mounting structure 62 and the like, and improves the connection reliability and stability of the first battery 11 and the vehicle-bottom longitudinal beam 200.

It should be noted that the first battery cell 41 may be disposed in the second portion 11b, or no first battery cell 41 may be disposed in the second portion 11b. For example, when the first battery cell 41 is provided, the energy density of the battery 1 can be improved; and when no first battery cell 41 is provided, the height of the first battery 11 above the ground can be increased, to form protection for the first battery 11, and the space is utilized for providing other structural components.

In some embodiments, as shown in FIG. 7 to FIG. 10, the second portion 11b includes one first battery layer 21 or a plurality of first battery layers 21 arranged in a vertical direction. The one first battery layer 21 or each of the plurality of first battery layers 21 includes a plurality of first battery units 31 arranged in parallel, and each of the plurality of first battery units 31 includes the at least one first battery cell 41.

In the above embodiment, the second portion 11b may include only one first battery layer 21 or may further include a plurality of first battery layers 21, and the plurality of first battery layers 21 are arranged in the vertical direction.

In the above embodiment, when the first battery unit 31 includes a plurality of first battery cells 41, it indicates that the plurality of first battery units 31 may be arranged in groups, which is beneficial to modular production, improves the production efficiency, and is beneficial to the simplification of current conduction and the like. When the first battery unit 31 only includes one first battery cell 41, it indicates that the plurality of first battery units 31 are not arranged in groups, so that the fixed plate used for group arrangement and the like can be omitted, thereby saving the space occupation and improving the energy density of the first battery 11.

In the above embodiment, the plurality of first battery units 31 are arranged regularly with equal height in the horizontal direction to form the first battery layer 21. For example, the plurality of first battery units 31 are sequentially arranged in the transverse direction, or the plurality of first battery units 31 are sequentially arranged in the longitudinal direction, or the plurality of battery 1 modules are arranged in the plurality of rows and columns along the transverse direction and the longitudinal direction. In addition, the plurality of first battery units 31 may be connected in series, in parallel, or in parallel and in series.

Therefore, since the second portion 11b includes one first battery layer 21 or a plurality of first battery layers 21 arranged in the vertical direction, which is beneficial to control on a height of the second portion 11b. For example, when the height of the second portion 11b needs to be high, the requirement can be satisfied by increasing the layer height or the number of layers of the first battery layer 21. When the height of the second portion 11b needs to be low, the requirements can be satisfied by reducing the layer height or the number of layers of the first battery layer 21. Moreover, several first battery layers 21 with different layer heights may be combined, so that the height of the second portion 11b satisfies the requirement.

In some embodiments, as shown in FIG. 7 to FIG. 10, each of the two first portions 11a further includes one first battery layer 21 or a plurality of first battery layers 21 arranged in the vertical direction, and a total height H4 of the at least one first battery cell 41 accommodated in the first portion 11a is greater than a total height H3 of the at least one first battery cell 41 accommodated in the second portion 11b.

In the above embodiment, when the first portion 11a and the second portion 11b each include one first battery layer 21 or a plurality of first battery layers 21 arranged in the vertical direction, it can be simply and effectively ensured that the total height of the first battery cell 41 accommodated in the first portion 11a is greater than the total height of the first battery cell 41 accommodated in the second portion 11b by respectively controlling parameters like the number of layers or the layer height of the first battery layers 21 in the first portion 11a and the number of layers or the layer height of the first battery layers 21 in the second portion 11b or combining the first battery layers 21 with different layer heights, which is beneficial to the full utilization of space and the improvement of the energy density of the battery 1.

In the above embodiment, since the first portion 11a is located at a transverse side surface of a transverse longitudinal beam 201, and since the second portion 11b is located below the vehicle-bottom longitudinal beam 200, by setting the total height of the first battery cell 41 accommodated in the first portion 11a to be greater than the total height of the first battery cell 41 accommodated in the second portion 11b, the first battery 11 can fully utilize spaces at the sides of the vehicle-bottom longitudinal beam 200 and the space under the vehicle-bottom longitudinal beam 200 to arrange the first battery cell 41, which is beneficial to the improvement of the energy density of the first battery 11.

In some embodiments, the bottom surface of the first portion 11a is flush with the bottom surface of the second portion 11b. For example, the bottom surface of the first battery layer 21 of the bottom layer in the first portion 11a and the bottom surface of the first battery layer 21 of the bottom layer in the second portion 11b can be flush with each other, so that the height of the first battery 11 above the ground can be easily ensured. Therefore, the first battery 11 can be better included, and it is beneficial to the battery swapping operation of the first battery 11.

In some embodiments, the number of layers of the first battery layers 21 in the first portion 11a is greater than the number of layers of the first battery layers 21 in the second portion 11b. Therefore, when the height of each of the first battery layers 21 in the first portion 11a is the same as or not much different from the height of each of the first battery layers 21 in the second portion 11b, by controlling the number of layers, it can be easily realized that the total height of the first battery cell 41 accommodated in the first portion 11a is greater than the total height of the first battery cell 41 accommodated in the second portion 11b, which is beneficial to the full utilization of space and the improvement of the energy density of the battery 1.

In some embodiments, the height of each first battery layer 21 in the first portion 11a is the same as the height of each first battery layer 21 in the second portion 11b. Therefore, since the height of each first battery layer 21 in the first portion 11a is the same as the height of each first battery layer 21 in the second portion 11b, position exchange of each first battery unit 31 can be realized, and the assembly difficulty is lowered. Moreover, first battery cells 41 with a same specification may be used to combine various first battery units 31, which simplifies the overall design and reduces the cost.

Alternatively, in some other embodiments, a height of at least one first battery layer 21 in the first portion 11a is different from a height of at least one first battery layer 21 in the second portion 11b. For example, the height of the at least one first battery layer 21 in the first portion 11a is greater than the height of the at least one first battery layer 21 in the second portion 11b. For another example, the height of the at least one first battery layer 21 in the first portion 11a is smaller than the height of the at least one first battery layer 21 in the second portion 11b. Therefore, a flexible design can be implemented to satisfy different design requirements.

Specifically, the height of the first battery layer 21 refers to a dimension of the first battery layer 21 along the vertical direction, and is determined based on a placement manner of the first battery units 31 included in the first battery layer 21. For example, when a length direction of the first battery unit 31 is provided along the vertical direction, a length of the first battery unit 31 is the height of the first battery layer 21. For another example, when a thickness direction of the first battery unit 31 is provided along the vertical direction, a thickness of the first battery unit 31 is the height of the first battery layer 21. For another example, when a width direction of the first battery unit 31 is provided along the vertical direction, a width of the first battery unit 31 is the height of the first battery layer 21.

Therefore, when the heights of the two first battery layers 21 are different, there may be a plurality of manners. For example, the first battery units 31 included in the two first battery layers 21 have the same placement manner but different specifications. For example, two first battery units 31 have length directions each as longitudinal direction, width directions each as transverse direction, and thickness directions each as vertical direction, but have different thickness dimensions. For another example, it can also be that the first battery units 31 included in the two first battery layers 21 have different placement manners but the same specification. For example, the two first battery units 31 are the same in length dimension, width dimension, and height dimension, but a length of one of the two first battery units 31 is vertical, a thickness of the other one of the two first battery units 31 is vertical. Examples are omitted herein.

For example, in some specific examples, there are one first battery layer 21 in the second portion 11b and two first battery layers 21 in the first portion 11a. A lower first battery layer 21 in the first portion 11a has a same height as and is flush with the first battery layer 21 in the second portion 11b, and an upper first battery layer 21 in the first portion 11a has a height greater than or equal to the height of the lower first battery layer 21 in the first portion 11a.

In the above embodiment, the lower first battery layer 21 in the first portion 11a and the first battery layer 21 in the second portion 11b have the same height and are flush with each other, which means that a bottom surface of the lower first battery layer 21 in the first portion 11a is flush with a bottom surface of the first battery layer 21 in the second portion 11b, and a top surface of the lower first battery layer 21 in the first portion 11a is flush with a top surface of the first battery layer 21 in the second portion 11b.

Therefore, the space can be fully utilized to simplify the arrangement of the first battery unit 31. For example, compatibility and interchangeability and the like between a first battery unit 31 of the lower first battery layer 21 in the first portion 11a and a first battery unit 31 of the first battery layer 21 in the second portion 11b can be realized. Moreover, it can be effectively ensured that the total height of the first battery cell 41 accommodated in the first portion 11a is greater than the total height of the first battery cell 41 accommodated in the second portion 11b, thereby being beneficial to the sufficient utilization of the space and the improvement of the energy density of the battery 1. In addition, it can also be ensured that a distance of the first battery 11 above the ground is sufficient, which is beneficial to battery swapping and that the battery 1 is protected from being pumped.

In some embodiments, a plurality of first battery layers 21 are arranged in the first portion 11a, and arrangement directions of a plurality of first battery units 31 in at least two first battery layers 21 are perpendicular. For example, a plurality of first battery units 31 in at least one first battery layer 21 in the first portion 11a are sequentially arranged in the transverse direction, and a plurality of first battery units 31 in at least one first battery layer 21 in the first portion 11a are sequentially arranged in the longitudinal direction simultaneously.

Alternatively, in some other embodiments, a plurality of first battery layers 21 are disposed in the first portion 11a, and arrangement directions of the plurality of first battery units 31 in each of the first battery layers 21 are the same. For example, a plurality of first battery units 31 in each of the first battery layers 21 in the first portion 11a are each sequentially arranged in the transverse direction. For another example, the plurality of first battery units 31 in each of the first battery layers 21 in the first portion 11a are each sequentially arranged in the longitudinal direction.

Therefore, a flexible arrangement of the first battery unit 31 in the first portion 11a can be realized, and different actual requirements are satisfied.

In some embodiments, one first battery layer 21 is disposed in the second portion 11b, and arrangement directions of a plurality of first battery units 31 in the first battery layer 21 in the second portion 11b are the same as arrangement directions of a plurality of first battery units 31 in at least one first battery layer 21 in the first portion 11a. For example, the plurality of first battery units 31 in the first battery layer 21 in the second portion 11b are sequentially arranged in the transverse direction, and the plurality of first battery units 31 in the at least one first battery layer 21 in the first portion 11a are also sequentially arranged in the transverse direction. For another example, the plurality of first battery units 31 in the first battery layer 21 in the second portion 11b are sequentially arranged in the longitudinal direction, and the plurality of first battery units 31 in the at least one first battery layer 21 in the first portion 11a are also sequentially arranged in the longitudinal direction.

Alternatively, in some other embodiments, one first battery layer 21 is disposed in the second portion 11b, and the arrangement directions of the plurality of first battery units 31 in the first battery layer 21 in the second portion 11b are perpendicular to the arrangement directions of the plurality of first battery units 31 in the at least one first battery layer 21 in the first portion 11a. For example, the plurality of first battery units 31 in the first battery layer 21 in the second portion 11b are sequentially arranged in the transverse direction, and the plurality of first battery units 31 in the at least one first battery layer 21 in the first portion 11a are sequentially arranged in the longitudinal direction. For another example, the plurality of first battery units 31 in the first battery layer 21 in the second portion 11b are sequentially arranged in the longitudinal direction, and the plurality of first battery units 31 in the at least one first battery layer 21 in the first portion 11a are sequentially arranged in the transverse direction.

Therefore, the flexible arrangements of the first battery units 31 in the second portion 11b and the first portion 11a can be realized, and different actual requirements are satisfied.

In some embodiments, the plurality of first battery units 31 in the at least one first battery layer 21 are arranged in the longitudinal direction, and a length direction of each of the plurality of first battery units 31 in the at least one first battery layer 21 extends in the transverse direction. Therefore, the space can be fully utilized, and the first battery units 31 are convenient to be arranged to form the first battery layer 21.

In some embodiments, the plurality of first battery units 31 in the at least one first battery layer 21 are arranged in the transverse direction, and the length direction of each of the plurality of first battery units 31 in the at least one first battery layer 21 extends in the longitudinal direction. Therefore, the space can be fully utilized, and the first battery units 31 are convenient to be arranged to form the first battery layer 21.

Therefore, the flexible design of the first battery layer 21 can be implemented, and different actual requirements are satisfied.

In some embodiments, the at least one first battery unit 31 includes a plurality of first battery cells 41, and the plurality of first battery cells 41 are arranged along one of a length direction, a width direction, and a thickness direction of the first battery unit 31.

For example, the plurality of first battery cells 41 included in the at least one first battery unit 31 are arranged along the length direction of the first battery unit 31. For another example, the plurality of first battery cells 41 included in the at least one first battery unit 31 are arranged along the width direction of the first battery unit 31. For another example, the plurality of first battery cells 41 included in the at least one first battery unit 31 are arranged along the thickness direction of the first battery unit 31. Therefore, the flexible design of the first battery unit 31 can be implemented, and different actual requirements are satisfied.

In some embodiments, as shown in FIG. 2 to FIG. 7, each of at least two batteries 1 of the plurality of batteries 1 included in the battery assembly 100 is the first battery 11, and all the first batteries 11 are adapted to be sequentially arranged in a longitudinal direction of the vehicle 1000. Therefore, the space can be fully utilized, the arrangements of the plurality of first batteries 11 do not interfere with each other, and each first battery 11 can be independently disassembled and assembled relative to the vehicle 1000.

In the above embodiment, the number of the first batteries 11 is not limited and can be matched according to different vehicle types and different mileage until battery output requirements are satisfied. For example, the number of the first batteries 11 may be specifically set according to parameters such as the dimension of the first battery 11 itself and a wheelbase of the vehicle 1000. For example, the number of the first batteries 11 may be set to two, three, four, and the like, to ensure that the number of the first batteries 11 is not too large or too small, which is beneficial to a flexible battery swapping operation according to different vehicle types and mileage.

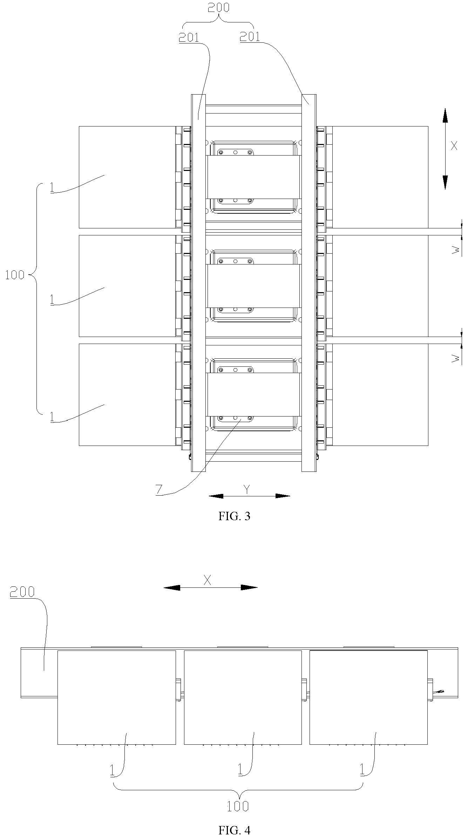

In some embodiments, with reference to FIG. 3 and FIG. 7, an avoidance gap is defined between two adjacent ones of the first batteries 11. Therefore, an unlocking device can be extended between the two first batteries 11 through the avoidance gap, to perform a mounting operation or an unlocking operation on the first battery 11. Moreover, by providing the avoidance gap, a collision problem of two adjacent first batteries 11 can be avoided, and the design precision and mounting difficulty are lowered. In the above embodiment, a dimension of the avoidance gap is not limited, as long as the avoidance gap does not waste a large space, and enough space can be ensured for performing locking and unlocking operation.

It should be noted that the plurality of first batteries 11 may be the same or different. For example, in some embodiments, each of the first batteries 11 has the same specification, i.e., any two first batteries 11 are the same. Therefore, the production cost can be lowered. Moreover, the space can be fully utilized simply and effectively, and an energy density of the battery assembly 100 is improved.

For another example, in some other embodiments, at least two of the first batteries 11 have different specifications. For example, the at least two of the first batteries 11 may be different in dimension. For another example, the at least two of the first batteries 11 may also be different in capacitance. For another example, the at least two of the first batteries 11 may be different in dimension, capacitance, and the like concurrently. When the dimensions of the at least two of the first batteries 11 are different, the specific structural design may be performed according to a vehicle bottom structure of the vehicle 1000, and the space is fully utilized. When the capacitances of the at least two of the first batteries 11 is different, a first battery 11 that have a suitable capacitance may be replaced according to the mileage of the vehicle 1000. In this way, flexible settings can be achieved.

In some embodiments, as shown in FIG. 12, at least one of the plurality of batteries 1 included in the battery assembly 100 is a second battery 12. The second battery 12 is adapted to be located at a single transverse side of the vehicle-bottom longitudinal beam 200, and the second battery 12 has a top surface higher than a bottom surface of the vehicle-bottom longitudinal beam 200 and includes at least one second battery cell 42.

In the above embodiment, at least one second battery 12 may be disposed at one transverse side of the vehicle-bottom longitudinal beam 200, and/or at least one second battery 12 may be disposed at the other transverse side of the vehicle-bottom longitudinal beam 200. As a result, the arrangement position of the second battery 12 is flexible, which allows for flexible use of space and facilitates mounting. Moreover, the dimension of the second battery 12 can be designed to be smaller, which is beneficial to battery swapping requirements of short-range driving.

In the above embodiment, the top surface of the second battery 12 is higher than a height center of the vehicle-bottom longitudinal beam 200, and the bottom surface of the second battery 12 may be lower than, flush with, or higher than the bottom surface of the vehicle-bottom longitudinal beam 200, so that the second battery 12 is located at the single transverse side of the vehicle-bottom longitudinal beam 200 to use the space of the position. Therefore, the second battery 12 can make full use of the space at the single transverse side of the vehicle-bottom longitudinal beam 200 to provide a larger number of second battery cells 42, thereby ensuring that an energy density of the second battery 12 is high, or that the height of the second battery 12 above the ground can be increased, and ensuring that there is enough space reserved between the bottom of the second battery 12 and the ground for battery swapping operation. Moreover, because of an improvement in the height of the second battery 12 above the ground, risks of hotting and scratching the bottom of the second battery 12 due to the protrusions of the ground and the like can be reduced, and use safety and a service life of the second battery 12 are improved. In summary, the second battery 12 with the above structure can effectively solve the problem of low space utilization, which is beneficial to an improvement in safety and reliability of the second battery 12 and battery swapping of the second battery 12.

In some embodiments, as shown in FIG. 12, the mounting structure 6 includes a second mounting structure 63 disposed at the second battery 12. The second mounting structure 63 is located between the second battery 12 and an outer side surface of the vehicle-bottom longitudinal beam 200.

Therefore, since the second mounting structure 63 on the second battery 12 is located between the second battery 12 and the outer side surface of the vehicle-bottom longitudinal beam 200, the position of the second mounting structure 63 is hidden, and the second mounting structure 63 can be protected, such that the second mounting structure 63 is prevented from being bumped and damaged, improving the mounting reliability of the battery 1. Moreover, the occurrence of a problem that the second mounting structure 63 cannot be detached and replaced and the like, which are caused by corrosion on the second mounting structure 63 by splashed muddy water during the operation of the vehicle 1000, can be avoided.

It should be noted that specific optional examples of the second mounting structure 63 may refer to the design of the first mounting structure 62, and details are omitted herein. For example, the second mounting structure 63 includes a plurality of sub-mounting portions 61 arranged at intervals in the longitudinal direction, and details are omitted herein.

In some embodiments, as shown in FIG. 12, the second battery 12 includes one second battery layer or a plurality of second battery layers 22 arranged in a vertical direction. The one second battery layer 22 or each of the plurality of second battery layers 22 includes a plurality of second battery units 32 arranged in parallel, and each of the plurality of second battery units 32 includes the at least one second battery cell 42.

In the above embodiment, the second battery 12 may include only one second battery layer 22, or the second battery 12 may further include a plurality of second battery layers 22, and the plurality of second battery layers 22 are arranged in the vertical direction.

In the above embodiment, when the second battery unit 32 includes a plurality of second battery cells 42, it indicates that the plurality of second battery units 32 may be arranged in groups, which is conducive to modular production, improves the production efficiency, and is beneficial to the simplification of current conduction and the like; and when the second battery unit 32 includes only one second battery cell 42, it indicates that the plurality of second battery units 32 are not arranged in groups, so that the fixed plate used for group arrangement and the like can be omitted, thereby saving space occupation and improving the energy density of the second battery 12.

In the above embodiment, the plurality of second battery units 32 are arranged regularly with equal height in the horizontal direction to form the second battery layer 22. For example, the plurality of second battery units 32 are sequentially arranged in the transverse direction, or the plurality of second battery units 32 are sequentially arranged in the longitudinal direction, or the plurality of battery 1 modules are arranged in a plurality of rows and columns along the transverse direction and the longitudinal direction. In addition, the plurality of second battery units 32 may be connected in series, in parallel, or in parallel and in series.

Therefore, since the second battery 12 includes one second battery layer 22 or a plurality of second battery layers 22 arranged in the vertical direction, which is beneficial to control on a height of the second battery 12. For example, when the height of the second battery 12 needs to be high, the requirement can be satisfied by increasing a layer height or a number of layers of the second battery layer 22. When the height of the second battery 12 needs to be low, the requirements can be satisfied by reducing the layer height or the number of layers of the second battery layer 22. Moreover, several second battery layers 22 with different layer heights may be combined, so that the height of the second battery 12 satisfies the requirement.

It should be noted that specific optional examples of the second battery layer 22 may refer to the design of the first battery layer 21, and details are omitted herein. Specific optional examples of the second battery unit 32 may refer to the design of the first battery unit 31, and details are omitted herein.

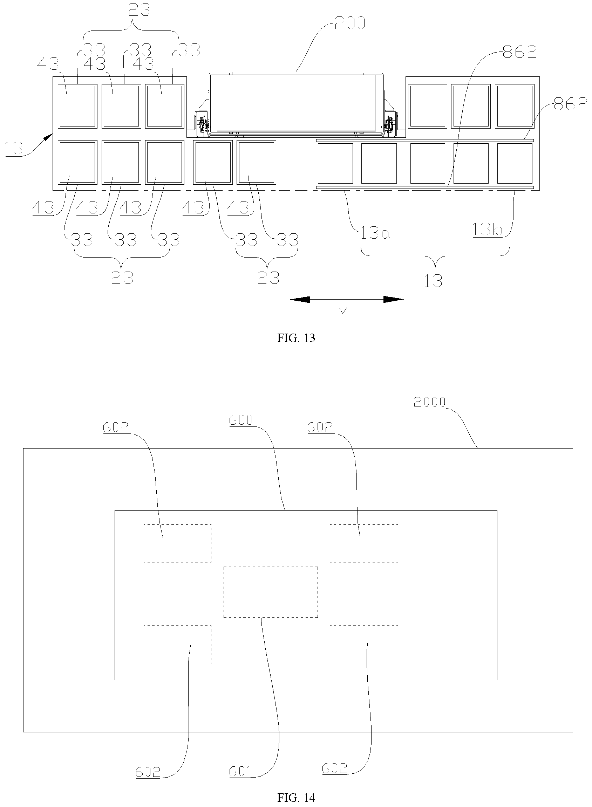

In some embodiments, as shown in FIG. 12 and FIG. 13, at least one of the plurality of batteries 1 is a third battery 13. The third battery 13 includes a third portion 13a and a fourth portion 13b. Each of the third portion 13a and the fourth portion 13b includes at least one third battery cell 43. One fourth portion 13b is provided and disposed at a transverse side of the third portion 13a. A top surface of the fourth portion 13b is higher than a top surface of the third portion 13a. The top surface of the third portion 13a is adapted to be lower than a bottom surface of the vehicle-bottom longitudinal beam 200. The third portion 13a is adapted to be located below the vehicle-bottom longitudinal beam 200 of the vehicle 1000. The fourth portion 13b is adapted to be located at a single transverse side of the vehicle-bottom longitudinal beam 200. The top surface of the fourth portion 13b is adapted to be higher than the bottom surface of the vehicle-bottom longitudinal beam 200.

Therefore, the third portion 13a and the fourth portion 13b can avoid the vehicle-bottom longitudinal beam 200, and the space below the vehicle-bottom longitudinal beam 200 and the space on the transverse side surface of the vehicle-bottom longitudinal beam 200 are fully utilized for providing the third battery cell 43, such that the third battery 13 is ensured to have a high energy density, or a height of the third battery 13 above the ground can be improved, ensuring that there is sufficient space to be reserved between the bottom of the third battery 13 and the ground for the battery swapping operation. Moreover, because of an improvement in the height of the third battery 13 above the ground, risks of hitting and scratching the bottom of the third battery 13 due to the protrusions of the ground and the like can be reduced, and use safety and a service life of the third battery 13 are improved. In summary, the third battery 13 with the above structure can effectively solve the problem of low space utilization, which is beneficial to an improvement in safety and reliability of the third battery 13 and battery swapping of the third battery 13.

It should be noted that specific optional examples of the third portion 13a may refer to the design of the second portion 11b, and details are omitted herein. Specific optional examples of the fourth portion 13b may refer to the design of the first portion 11a, and details are omitted herein. For example, the top surface of the fourth portion 13b is adapted to be higher than the height center of the vehicle-bottom longitudinal beam 200.

In some embodiments, the mounting structure 6 includes a third mounting structure 64 disposed at the third portion 13a and/or the fourth portion 13b. The third mounting structure 64 is located between the third battery 13 and the vehicle-bottom longitudinal beam 200.

For example, the mounting structure 6 includes a third mounting structure 64 disposed on the third portion 13a, and the third mounting structure 64 on the third portion 13a is located between the third portion 13a and the bottom surface of the vehicle-bottom longitudinal beam 200. Therefore, since the third mounting structure 64 on the third portion 13a is located between the third portion 13a and the bottom surface of the vehicle-bottom longitudinal beam 200, the position of the third mounting structure 64 is made hidden, and can obtain protection, such that the third mounting structure 64 is prevented from being bumped and damaged, improving the mounting reliability of the third battery 13. Moreover, the occurrence of a problem that the third mounting structure 64 cannot be disassembled and replaced and the like, which are caused by corrosion on the third mounting structure 64 by splashed muddy water during the operation of the vehicle 1000, can be avoided.

For example, the mounting structure 6 includes a third mounting structure 64 disposed on the fourth portion 13b, and the third mounting structure 64 disposed on the fourth portion 13b is located between the fourth portion 13b and the outer side surface of the vehicle-bottom longitudinal beam 200. Therefore, since the third mounting structure 64 on the fourth portion 13b is located between the fourth portion 13b and the outer side surface of the vehicle-bottom longitudinal beam 200, the position of the third mounting structure 64 is made hidden, and the third mounting structure 64 can be protected, such that the third mounting structure 64 is prevented from being bumped and damaged, improving the mounting reliability of the third battery 13. Moreover, the occurrence of a problem that the third mounting structure 64 cannot be detached and replaced and the like, which are caused by corrosion on the third mounting structure 64 by splashed muddy water during the operation of the vehicle 1000, can be avoided.

For example, the mounting structure 6 includes a third mounting structure 64 disposed on the third portion 13a, and the third mounting structure 64 on the third portion 13a is located between the third portion 13a and the bottom surface of the vehicle-bottom longitudinal beam 200. Meanwhile, the mounting structure 6 further includes a third mounting structure 64 disposed on the fourth portion 13b, and the third mounting structure 64 on the fourth portion 13b is located between the fourth portion 13b and the outer side surface of the vehicle-bottom longitudinal beam 200. Therefore, the connection reliability of the third battery 13 can be effectively improved.

It should be noted that specific optional examples of the third mounting structure 64 may refer to the design of the first mounting structure 62, and details are omitted herein. For example, the third mounting structure 64 includes a plurality of sub-mounting portions 61 arranged at intervals in the longitudinal direction, and the like.

In some embodiments, as shown in FIG. 12 and FIG. 13, the third portion 13a has a second docking structure 76 disposed at the top surface of the third portion 13a. The second docking structure 76 is adapted to be extended between two longitudinal beams 201 of the vehicle-bottom longitudinal beam 200, and the second docking structure 76 is configured to dock with the vehicle 1000 to allow for current conduction and/or liquid conduction.

In the above embodiment, a second docking structure 76 that may dock with the vehicle 1000 is disposed on the third portion 13a to allow for current conduction or liquid conduction or simultaneously current conduction and liquid conduction. For example, when the second docking structure 76 implements current conduction, the current transmission between the vehicle 1000 and the battery 1 can be implemented, to implement power supply for the vehicle 1000 by the battery 1, control of the vehicle 1000 to the battery 1, and the like. For example, when the second docking structure 76 implements liquid conduction, heat transfer between the refrigerating medium system of the vehicle 1000 and the battery 1 may be implemented, to adjust the temperature of the battery 1 by using the refrigerating medium system, to improve the operation reliability and safety of the battery 1, or the waste heat of the battery 1 is absorbed by using the refrigerating medium system to meet the heat source requirement of the heat-pump air-conditioning system of the vehicle 1000, and details are omitted herein.

In the above embodiment, when the top surface of the third portion 13a is lower than the vehicle-bottom longitudinal beam 200, it is indicated that any position of the top surface of the third portion 13a is not higher than the bottom surface of the vehicle-bottom longitudinal beam 200 when the third battery 13 and the vehicle 1000 are mounted in place, so that a sufficient space is reserved above the third portion 13a for providing the second docking structure 76. Since the second docking structure 76 is disposed on the top surface of the third portion 13a, the second docking structure 76 can be protected, such that the second docking structure 76 is prevented from being bumped and damaged and can be prevented from being out of operation caused by being corroded by splashed muddy water during the operation of the vehicle 1000. Moreover, the second docking structure 76 can be prevented from occupying a space at an outer side of the third battery 13, which is further beneficial to an improvement in an energy density of the third battery 13.

In the above embodiment, the vehicle-bottom longitudinal beam 200 may include two longitudinal beams 201 arranged in parallel. The second docking structure 76 may be extended into the space between the two longitudinal beams 201. In this way, the second docking structure 76 can be more effectively prevented from occupying other spaces, and the energy density of the third battery 13 can be further improved by using the saved space.

It should be noted that the specific optional examples of the second docking structure 76 on the third battery 13 may refer to the design of the first docking structure 75 on the first battery 11, and details are omitted herein. For example, the docking surface of the second docking structure 76 faces upwards to allow for docking in the vertical direction, or the docking surface of the first docking structure 75 faces horizontally to allow for docking in the horizontal direction, or the like.

In some embodiments, as shown in FIG. 12 and FIG. 13, each of the third portion 13a and the fourth portion 13b includes one third battery layer 23 or a plurality of third battery layers 23 arranged in a vertical direction. The one third battery layer 23 or each of the plurality of third battery layers 23 includes a plurality of third battery units 33 arranged in parallel. Each of the plurality of third battery units 33 includes the at least one third battery cell 43. Moreover, a total height H6 of the at least one third battery cell 43 accommodated in the fourth portion 13b is greater than a total height H5 of the at least one third battery cell 43 accommodated in the third portion 13a.

In the above embodiment, when the third battery unit 33 includes a plurality of third battery cells 43, it indicates that the plurality of third battery units 33 may be arranged in groups, which is conducive to modular production, improves the production efficiency, and is beneficial to the simplification of current conduction and the like; and when the third battery unit 33 includes only one third battery cell 43, it indicates that the plurality of third battery units 33 are not arranged in groups, so that the fixed plate used for group arrangement and the like can be omitted, thereby saving space occupation and improving the energy density of the third battery 13.

In the above embodiment, the plurality of third battery units 33 are arranged regularly with equal height in the horizontal direction to form the third battery layer 23. For example, the plurality of third battery units 33 are sequentially arranged in the transverse direction, or the plurality of third battery units 33 are sequentially arranged in the longitudinal direction, or the plurality of battery 1 modules are arranged in a plurality of rows and columns along the transverse direction and the longitudinal direction. In addition, the plurality of third battery units 33 may be connected in series, in parallel, or in parallel and in series.

Therefore, since the third portion 13a and the fourth portion 13b each include one third battery layer 23 or a plurality of third battery layers 23 arranged in the vertical direction, which is beneficial to control on a height of the third portion 13a and a height of the fourth portion 13b. For example, when the height of the third portion 13a or the height of the fourth portion 13b needs to be high, the requirement can be satisfied by increasing a layer height or a number of layers of the corresponding third battery layer 23. When the height of the third portion 13a or the height of the fourth portion 13b needs to be low, the requirements can be satisfied by reducing the layer height or the number of layers of the corresponding third battery layer 23. Moreover, several third battery layers 23 with different layer heights may be combined, so that the height of the third portion 13a or the height of the fourth portion 13b satisfies the requirement.

Moreover, it can be simply and effectively ensured that the total height of the third battery cell 43 accommodated in the fourth portion 13b is greater than the total height of the third battery cell 43 accommodated in the third portion 13a by respectively controlling parameters like the number of layers or the layer height of the third battery layers 23 in the third portion 13a and the number of layers or the layer height of the third battery layers 23 in the fourth portion 13b or combining the third battery layers 23 with different layer heights, which is beneficial to the full utilization of space and the improvement of the energy density of the third battery 13.

In the above embodiment, since the fourth portion 13b is located at the transverse side surface of the transverse longitudinal beam 201, and since the third portion 13a is located below the vehicle-bottom longitudinal beam 200, by setting the total height of the third battery cell 43 accommodated in the fourth portion 13b to be greater than the total height of the third battery cell 43 accommodated in the third portion 13a, the third battery 13 can fully utilize the spaces at the sides of the vehicle-bottom longitudinal beam 200 and the space under the vehicle-bottom longitudinal beam 200 to arrange the third battery cell 43, which is beneficial to the improvement of the energy density of the third battery 13.

It should be noted that specific optional examples of the third battery layer 23 may refer to the design of the first battery layer 21, and details are omitted herein. Specific optional examples of the third battery unit 33 may refer to the design of the first battery unit 31, and details are omitted herein.

It should be noted that a design of related relationship of the third portion 13a and the fourth portion 13b may refer to a related relationship design of the first portion 11a and the second portion 11b, and details are omitted herein. For example, a housing of the third portion 13a and a housing of the fourth portion 13b may be integrally formed or formed separately, which is not limited herein.

For example, a bottom surface of the fourth portion 13b is flush with a bottom surface of the third portion 13a. For example, a number of layers of the third battery layer 23 in the fourth portion 13b is greater than a number of layers of the third battery layer 23 in the third portion 13a. For example, a height of each third battery layer 23 in the fourth portion 13b is the same as a height of each third battery layer 23 in the third portion 13a, or a height of at least one third battery layer 23 in the fourth portion 13b is different from a height of at least one third battery layer 23 in the third portion 13a. For example, the height of the at least one third battery layer 23 in the fourth portion 13b is greater than the height of the at least one third battery layer 23 in the third portion 13a.

In some embodiments, at least two batteries 1 of the plurality of batteries 1 are different in at least one of capacitance, shape, and size, i.e., the at least two batteries 1 are not the same, so that an appropriate battery 1 can be replaced according to different application scenarios, vehicle types, mileage, and the like, thereby better matching the driving requirements and considering a vehicle-mounted load.

Of course, the present disclosure is not limited thereto. For example, in some other embodiments, each of the plurality of batteries 1 in the battery assembly 100 has a same specification, i.e., each battery 1 is identical, for example, has the same size, capacitance, shape, and the like. Therefore, universal engagement and mounting of the plurality of batteries 1 can be achieved, the battery swapping difficulty is lowered, and the battery swapping efficiency is improved. In addition, the requirements for different environments, different mileage, different vehicle types, and the like can be satisfied simply by selecting different number of batteries, and the compatibility is good.

In some embodiments, the plurality of batteries 1 in the battery assembly 100 is connected in series and/or in parallel. For example, all the batteries 1 may each be connected in series. For another example, all the batteries 1 may each be connected in parallel. For another example, the plurality of batteries 1 may be connected in parallel and in series. Therefore, the battery 1 may be set to be in different current conduction forms according to different environments, different mileage, and different vehicle types, thereby facilitating the satisfaction of different actual requirements.

In some embodiments, as shown in FIG. 5, each of the plurality of batteries 1 has an electrically conductive connector 741. The electrically conductive connector 741 is adapted to be in current conduction with the vehicle 1000 or with an adjacent one of the plurality of batteries 1. For example, when the electrically conductive connector 741 on one battery 1 is in current conduction with the vehicle 1000, the battery 1 may directly implement current transmission with the vehicle 1000. For example, when the electrically conductive connector 741 on one battery 1 is in current conduction with its adjacent battery 1, the battery 1 may be in current conduction with the vehicle 1000 through the adjacent battery 1, to implement current transmission with the vehicle 1000.

In short, by arranging the electrically conductive connector 741 on each battery 1, current transmission between the vehicle 1000 and the battery assembly 100 can be realized, to implement power supply for the vehicle 1000 by the battery assembly 100, control of the vehicle 1000 to the battery 1, and the like. For example, the first docking structure 75 and the second docking structure 76 each include an electrically conductive connector 741, and the electrically conductive connector 741 may also be provided on the second battery 12.

In some embodiments, the electrically conductive connector 741 is located at a top surface of each of the plurality of batteries 1 and has a docking surface facing upwards. Therefore, when each battery 1 is mounted, each battery 1 can be lifted upwards, and the electrically conductive connector 741 can be docked upwards in place. When each battery 1 is disassembled, each battery 1 is pulled down, and the electrically conductive connector 741 can be disengaged downwards from its docking. In this way, the battery swapping operation of each battery 1 is simplified, and battery swapping efficiency of each battery 1 is improved. In addition, a movement space required for docking in this manner is small, which can save space occupation caused by docking, and is beneficial to the improvement of the energy density of the battery 1.

Of course, the present disclosure is not limited thereto. For example, it can also be that the electrically conductive connector 741 is configured to be located on the top surface of the battery 1 and has the docking surface facing horizontally to allow for docking in the horizontal direction. Therefore, when each battery 1 is mounted, each battery 1 may be lifted up first, and then be pushed horizontally (for example, be pushed horizontally forwards or backwards) to complete docking, to satisfy different design requirements.

In addition, since the electrically conductive connector 741 is provided on the top surface of the battery 1, the electrically conductive connector 741 can be protected, such that the electrically conductive connector 741 is prevented from being bumped and damaged and can be prevented from being out of operation caused by being corroded by the splashed muddy water during the operation of the vehicle 1000. In addition, the electrically conductive connector 741 can also be prevented from occupying a space at an outer side of each battery 1, which is further beneficial to the improvement of the energy density of each battery 1.

Certainly, the present disclosure is not limited thereto. For example, in other embodiments, the electrically conductive connector 741 may also be disposed at other positions of the battery 1, and details are omitted herein.

In some embodiments, as shown in FIG. 5, each of the plurality of batteries 1 has a fluid conduction connector 742 adapted to be in fluid conduction with the vehicle 1000 or with an adjacent one of the plurality of batteries 1. For example, when the electrically conductive connector 741 on one battery 1 is in fluid conduction with the vehicle 1000, the battery 1 may directly implement fluid transmission with the vehicle 1000, so that the heat transfer between the refrigerating medium system of the vehicle 1000 and the battery 1 can be realized, to adjust the temperature of the battery 1 by using the refrigerating medium system, to improve the operation reliability and safety of the battery 1, or the waste heat of the battery 1 is absorbed by using the refrigerating medium system to satisfy the heat source requirement of the heat-pump air-conditioning system of the vehicle 1000.

For example, when the electrically conductive connector 741 on one battery 1 is in fluid conduction with the adjacent battery 1, the battery 1 may be in fluid conduction with the vehicle 1000 through the adjacent battery 1 to implement the fluid transmission with the vehicle 1000, so that the heat transfer between the refrigerating medium system of the vehicle 1000 and the battery 1 can be realized, to adjust the temperature of the battery 1 by using the refrigerating medium system, to improve the operation reliability and safety of the battery 1, or the waste heat of the battery 1 is absorbed by using the refrigerating medium system to satisfy the heat source requirement of the heat-pump air-conditioning system of the vehicle 1000.

In short, fluid transmission between the vehicle 1000 and the battery assembly 100 can be achieved by providing the fluid conduction connector 742 on each battery 1, so that the temperature of the battery 1 is adjusted by using the refrigerating medium system, to improve the operation reliability and safety of the battery 1, or the waste heat of the battery 1 is absorbed by using the refrigerating medium system to satisfy the heat source requirement of the heat-pump air-conditioning system of the vehicle 1000. For example, the first docking structure 75 and the second docking structure 76 each include a fluid conduction connector 742, and the second battery 12 may also be provided with a fluid conduction connector 742.

In some embodiments, the fluid conduction connector 742 is located at a top surface of each of the plurality of batteries 1 and has a docking surface facing upwards. Therefore, when each battery 1 is mounted, each battery 1 can be lifted upwards, and the fluid conduction connector 742 can be docked upwards in place. When each battery 1 is disassembled, each battery 1 is pulled down, and the fluid conduction connector 742 can be disengaged downwards from its docking. In this way, the battery swapping operation of each battery 1 is simplified, and the battery swapping efficiency of each battery 1 is improved. In addition, the movement space required for docking in this manner is small, which can save space occupation caused by docking, and is beneficial to the improvement of the energy density of the battery 1.

Of course, the present disclosure is not limited thereto. For example, it can also be that the fluid conduction connector 742 is configured to be located on the top surface of the battery 1 and has the docking surface facing horizontally to allow for docking in the horizontal direction. Therefore, when each battery 1 is mounted, each battery 1 may be lifted up first, and then be pushed horizontally (for example, be pushed horizontally forwards or backwards) to complete docking, to satisfy different design requirements.

In addition, since the fluid conduction connector 742 is provided on the top surface of the battery 1, the fluid conduction connector 742 can be protected, such that the fluid conduction connector 742 can be prevented from being bumped and damaged and can be prevented from being out of operation caused by being corroded by the splashed muddy water during the operation of the vehicle 1000. In addition, the fluid conduction connector 742 can also be prevented from occupying the space at the outer side of each battery 1, which is further beneficial to the improvement of the energy density of each battery 1.

Certainly, the present disclosure is not limited thereto. For example, in other embodiments, the fluid conduction connector 742 may also be disposed at other positions of the battery 1, and details are omitted herein.

In some embodiments, as shown in FIG. 5, the mounting structure 6 is adapted to be detachably mounted at a vehicle-bottom longitudinal beam 200 of the vehicle 1000, and the mounting structure 6 is located at a side of each of the plurality of batteries 1 facing towards the vehicle-bottom longitudinal beam 200.

Therefore, since the mounting structure 6 on the battery 1 is located at a side of the battery 1 facing towards the vehicle-bottom longitudinal beam 200 and is adapted to be detachably mounted on the vehicle-bottom longitudinal beam 200 of the vehicle 1000, the mounting structure 6 is located between the battery 1 and the outer side surface of the vehicle-bottom longitudinal beam 200, so that the position of the mounting structure 6 is made hidden and the mounting structure 6 can be protected, which prevents the mounting structure 6 from being bumped and damaged, and improves the mounting reliability of the battery 1. Moreover, the occurrence of a problem that the mounting structure 6 cannot be detached and replaced and the like, which are caused by corrosion on the mounting structure 6 by splashed muddy water during the operation of the vehicle 1000, can be avoided.

In addition, in the related art, when the battery is mounted by using the battery swapping frame, a plurality of locking-attachment structures is arranged at a frame outer peripheral position of the battery swapping frame, i.e., the locking-attachment structure is located at the side of the battery away from the vehicle-bottom longitudinal beam and bears a great torque, and the mounting reliability of the battery is low. With the battery 1 according to the embodiments of the present disclosure, since the mounting structure 6 on the battery 1 is located at the side of the battery 1 facing towards the vehicle-bottom longitudinal beam 200, the mounting structure 6 bears a small torque, and the mounting reliability of the battery 1 is high.

In the above embodiment, a manner where the mounting structure 6 is disposed on the battery 1 is not limited. The mounting structure 6 and the housing 5 of the battery 1 may be integrally formed; or the mounting structure 6 and the housing 5 of the battery 1 may be formed separately, and the mounting structure 6 is directly or indirectly mounted to the housing 5 of the battery 1. In the above embodiment, since the mounting structure 6 detachably mounts the battery 1 to the vehicle-bottom longitudinal beam 200, the battery 1 is detachable relative to the vehicle 1000, thereby satisfying the requirements of replacement, charging, maintenance, and the like of the battery 1.

It should be noted that a connection manner of the mounting structure 6 and the vehicle-bottom longitudinal beam 200 is not limited. It can be that the mounting structure 6 is directly connected to a part of the vehicle-bottom longitudinal beam 200 itself facing towards the mounting structure 6, or that the mounting structure 6 is indirectly connected to the connection structure 300 that is disposed on the vehicle-bottom longitudinal beam 200 and faces towards the mounting structure 6. In addition, it should be noted that a connection position of the mounting structure 6 and the vehicle-bottom longitudinal beam 200 is not limited. For example, it can be that the mounting structure 6 is connected to at least one of a top part, a bottom part, and a side part of the vehicle-bottom longitudinal beam 200.

For example, in some embodiments, as shown in FIG. 5, the vehicle-bottom longitudinal beam 200 has a connection structure 300. The mounting structure 6 is detachably connected to the connection structure 300, and at least one of the mounting structure 6 and the connection structure 300 is a locking structure For example, the mounting structure 6 is a locking structure. For another example, the connection structure 300 is a locking structure. For another example, the mounting structure 6 and the connection structure 300 are each locking structures.

The locking structure has a locked state and an unlocked state. In the locked state, the mounting structure 6 and the connection structure 300 are in the locked state and cannot be separated from each other, and the battery 1 is in a firmly mounted state. In the unlocked state, the mounting structure 6 and the connection structure 300 are in the unlocked state and can be separated from each other, and the battery 1 can be detached from the vehicle 1000.

Therefore, by providing the at least one of the mounting structure 6 and the connection structure 300 as the locking structure, it is beneficial to firm mounting of the battery 1, and disassembly and replacement requirements of the battery 1 are satisfied. Specifically, a specific type of the locking structure is not limited, for example, may include a screw, a padlock, or the like.

In some embodiments, an unlocking position of the locking structure is located at a longitudinal outer side of the battery 1. For example, the unlocking position is located in front of the battery 1 or behind the battery 1, such as located between two adjacent batteries 1 in the longitudinal direction. Therefore, since the unlocking position of the locking structure is located at the longitudinal outer side of the battery 1, the unlocking position is not shielded by the battery 1. In this way, it is very convenient to perform unlocking operation and locking observation on the locking structure.

Moreover, there is no need to punch holes from the bottom of the battery 1 in the vertical direction, so that an unlocking member extends into the holes in the vertical direction to touch the locking structure for unlocking. In this way, it can avoid that the space inside the battery 1 is occupied because of hole punching, and the energy density of the battery 1 can be further improved. Moreover, the problem of difficult sealing of the battery 1 because of hole punching is avoided, which is favorable to the processing and design of the battery 1.

In some embodiments, as shown in FIG. 1 to FIG. 4, at least two batteries 1 of the plurality of batteries 1 are arranged in a longitudinal direction of the vehicle-bottom longitudinal beam 200; and/or at least two batteries 1 of the plurality of batteries 1 are respectively disposed at two transverse sides of the vehicle-bottom longitudinal beam 200. Therefore, a space near the vehicle-bottom longitudinal beam 200 can be fully utilized according to actual situations, which is beneficial to an improvement in the energy density of the battery assembly 100. Moreover, when each battery 1 is detachably mounted to the vehicle-bottom longitudinal beam 200 through the mounting structure 6, a requirement that each mounting structure 6 is located at the side of the battery 1 facing towards the vehicle-bottom longitudinal beam 200 is satisfied.

For example, when a plurality of batteries 1 is provided and arranged along the longitudinal direction of the vehicle-bottom longitudinal beam 200, if the unlocking position of the locking structure is located at the longitudinal outer side of the battery 1, a gap between two adjacent batteries 1 may be 30 mm or more, thereby facilitating unlocking.

For example, in some embodiments, the battery assembly 100 may include at least one of the first battery 11, the second battery 12, and the third battery 13. For example, the battery assembly 100 may only include the first battery 11, or may only include the second battery 12, or may include only the third battery 13. For another example, the battery assembly 100 may include the first battery 11 and the second battery 12 simultaneously, or may include the second battery 12 and the third battery 13 simultaneously, or may include the first battery 11 and the third battery 13 simultaneously, or may include the first battery 11, the second battery 12, and the third battery 13 simultaneously.

For example, in some embodiments, as shown in FIG. 12, the second battery 12 and the third battery 13 may be pieced together into a general shape of the first battery 11 to form a first battery pack. That is, a fourth portion 13b of the third battery 13 in the first battery pack and the second battery 12 are respectively located at the two transverse sides of the vehicle-bottom longitudinal beam 200, and a third portion 13a of the third battery 13 in the first battery pack is configured to have a transverse dimension close to the transverse dimension of the vehicle-bottom longitudinal beam 200.

For another example, in some embodiments, as shown in FIG. 13, the two third batteries 13 may be pieced together into the general shape of the first battery 11 to form a second battery pack. That is, fourth portions 13b of the two third batteries 13 in the second battery pack are respectively located at the two transverse sides of the vehicle-bottom longitudinal beam 200. Third portions 13a of the two third batteries 13 in the second battery pack are sequentially arranged in the transverse direction, and a sum of transverse dimensions of the third portions 13a is close to the transverse dimension of the vehicle-bottom longitudinal beam 200.

Further, at least two of the first battery 11, the at least one first battery pack, and the at least one second battery pack may be configured to be arranged along the longitudinal direction of the vehicle-bottom longitudinal beam 200. Therefore, the space utilization rate can be improved, and the energy density of the battery assembly 100 is improved.

In some embodiments, with reference to FIG. 6, each battery 1 includes a plurality of battery cells 4. In the battery 1, the battery cells 4 may be separately arranged or arranged in groups. When the plurality of battery cells 4 are arranged in groups, for example, it can be that the plurality of battery cells 4 are formed as one battery unit 3. The plurality of battery units 3 are arranged in parallel to form one battery layer 2. The battery 1 has one battery layer 2 or a plurality of battery layers 2 arranged in the vertical direction.

In the above embodiment, the plurality of battery units 3 are arranged regularly with equal height in the horizontal direction to form the battery layer 2. For example, the plurality of battery units 3 are sequentially arranged in the transverse direction, or the plurality of battery unit 3 are sequentially arranged in the longitudinal direction, or the plurality of battery unit 3 are arranged in the plurality of rows and columns along the transverse direction and the longitudinal direction. In addition, the plurality of battery unit 3 may be connected in series, in parallel, or in parallel and in series.

Optionally, the arrangement directions of the plurality of battery units 3 in each battery layer 2 are the same. For example, the plurality of battery units 3 in each battery layer 2 are sequentially arranged in the transverse direction. For another example, the plurality of battery units 3 in each battery layer 2 are sequentially arranged in the longitudinal direction.

Optionally, the arrangement directions of the plurality of battery cells 3 in the at least two battery layers 2 are perpendicular. For example, the plurality of battery units 3 in the at least one battery layer 2 are sequentially arranged in the transverse direction. Meanwhile, the plurality of battery units 3 in the at least one battery layer 2 are also sequentially arranged in the longitudinal direction.

Therefore, by arranging the battery cells 4 in groups, an improvement in assembly efficiency of the battery 1 is facilitated, which is beneficial to the simplification of the current conduction and the like. Moreover, since the battery 1 has one battery layer 2 or a plurality of battery layers 2 arranged in the vertical direction, it is possible to simply and effectively ensure that the total height of the battery cells 4 accommodated in the battery 1 satisfies the requirements by controlling parameters such as the number of layers of battery layers 2 or layer heights of the battery layers 2 or combining battery layers 2 with different layer heights, which is beneficial to the full utilization of the space and the improvement of the energy density of the battery 1.

Of course, the present disclosure is not limited thereto. When the plurality of battery cells 4 are not arranged in groups, the fixed plate used for group arrangement and the like can be reduced, thereby saving space occupation and improving the energy density of the battery 1.

In some embodiments, with reference to FIG. 6 and FIG. 10, each battery 1 includes a temperature adjustment plate 8. For example, the temperature adjustment plate 8 may include at least one of a first adjustment plate 81, a second adjustment plate 82, a third adjustment plate 83, a fourth adjustment plate 84, and a fifth adjustment plate 85. The first adjustment plate 81 is disposed between two battery layers 2 that are disposed vertically adjacent to each other. The second adjustment plate 82 is disposed at a bottom of a bottom battery layer 2. The third adjustment plate 83 is disposed at a top of a top battery layer 2. The fourth adjustment plate 84 is disposed between two adjacent battery units 3 in a same battery layer 2. The fifth adjustment plate 85 is disposed between two adjacent battery cells 4 in a same battery cell 3. Therefore, by setting the temperature adjustment plate 8 in at least one form, adjustment on the temperature of the battery cell 4 can be realized, so that the battery 1 can operate at a suitable temperature, improving the operation reliability and service life of the battery 1, and improving operation energy efficiency of the battery 1.

In some embodiments, with reference to FIG. 6 and FIG. 10, the temperature adjustment plate 8 in the first battery 11 may include a first common horizontal plate 861. A part of the first common horizontal plate 861 is located in the first portion 11a, and the rest of the first common horizontal plate 861 is located in the second portion 11b. Therefore, the design of the temperature adjustment plate 8 can be simplified, and the assembly is simplified.

In addition, when the temperature adjustment plate 8 has a liquid path, the temperature of the battery 1 can be adjusted by controlling a temperature of a liquid flowing in the liquid path. Since a part of the first common horizontal plate 861 is located in the second portion 11b, and the rest of the first common horizontal plate 861 is located in the first portion 11a, the design of the liquid path can be simplified, and a connection design of the liquid inlet and outlet can be simplified. For example, the fluid conduction connector 742 disposed on the battery 1 may be in fluid conduction with the temperature adjustment plate 8.

In some embodiments, with reference to FIG. 13, the temperature adjustment plate 8 in the third battery 13 may include a second common horizontal plate 862. A part of the second common horizontal plate 862 is located in the third portion 13a, and the rest of the second common horizontal plate 862 is located in the fourth portion 13b. Therefore, the design of the temperature adjustment plate 8 can be simplified, and the assembly is simplified.

In addition, when the temperature adjustment plate 8 has a liquid path, the temperature of the battery 1 can be adjusted by controlling the temperature of the liquid flowing in the liquid path. Since a part of the second common horizontal plate 862 is located in the third portion 13a, and the rest of the second common horizontal plate 862 are located in the fourth portion 13b, the design of the liquid path can be simplified, and the connection design of the liquid inlet and outlet can be simplified. For example, the fluid conduction connector 742 disposed on the battery 1 may be in fluid conduction with the temperature adjustment plate 8.

In some embodiments, the housing 5 of the battery 1 may be made of a high-strength material, to ensure that reliability of a connection of the mounting structure 6 disposed on the housing 5 with the vehicle-bottom longitudinal beam 200. For example, the housing 5 of the battery 1 may be made of a high-strength steel rolled profile or the like.

The vehicle 1000 according to the embodiments of the present disclosure is described below with reference to the accompanying drawings.

The vehicle 1000 may include the battery 1 according to any one of the embodiments of the present disclosure.

The plurality of batteries 1 is disposed at the bottom of the vehicle 1000 and is configured to be separately detachable relative to the vehicle 1000, so that the corresponding number of batteries 1 may be matched according to different application scenarios, different mileage, different configurations of the vehicle 1000, and the like, which enhances the battery swapping flexibility. In this way, different vehicle models and application scenarios may be compatible. For example, trunk line, inverted short, light throwing, and other scenarios may be covered.

Moreover, there is no need to mount all batteries 1 to the vehicle 1000, reducing the load of the vehicle 1000. In addition, since each battery 1 can be separately disassembled and replaced, the battery 1 that has been deeply discharged can be disassembled and replaced, thereby avoiding the problem of power waste of the battery 1 caused by the replacement of the battery 1 without deep discharge.

In addition, compared with the solution of the whole large battery pack, when a plurality of batteries 1 with small dimensions are used in combination, since all batteries 1 need not to be replaced each time, the battery swapping efficiency is high, so that the throughput of the battery swapping station 2000 in the same space can be significantly improved.

A battery swapping station 2000 according to the embodiments of the present disclosure is described below with reference to the accompanying drawings.

The battery swapping station 2000 is configured to replace the battery 1 for the vehicle 1000 according to any one of the embodiments of the present disclosure.

In some embodiments, as shown in FIG. 14, the battery swapping station 2000 includes a battery swapping region 600. The vehicle 1000 is adapted to replace the battery 1 in the battery swapping region 600. The battery swapping region 600 includes a first region 601 and a second region 602. The first region 601 is adapted to be located directly below the battery 1. The second region 602 is configured to support a front wheel 400 and a rear wheel 500 that are adjacent to the battery 1, and a ground at the first region 601 is flush with a ground at the second region 602.

Since a height of the bottom surface of the battery 1 above the ground according to some embodiments of the present disclosure can be improved, the battery swapping station 2000 can cancel the whole vehicle lifting or trench digging requirement, thereby simplifying the site layout of the battery swapping station 2000 and improving the space utilization rate.

Optionally, the whole ground of the battery swapping region 600 is a plane. Therefore, construction difficulty of the battery swapping station 2000 is lowered. It is beneficial to a reduction in a construction cost of the battery swapping station 2000.

In some embodiments, as shown in FIG. 1 and FIG. 2, a vertical distance between a bottom surface of a wheel of the vehicle 1000 and the bottom surface of the battery 1 is H1, and a vertical distance between the bottom surface of the wheel of the vehicle 1000 and the bottom surface of the vehicle-bottom longitudinal beam 200 is H2. A height of a battery-swapping transport vehicle is H7. A vertical height of the battery 1 is L3. H2≥L3+H7, and H1>H7. Therefore, it is unnecessary to dig a trench in the battery swapping station 2000. Moreover, there is no need to lift the vehicle 1000 to realize the battery swapping. Moreover, the height of the battery 1 in the vertical direction may be better ensured to fully utilize the space, and the battery 1 is adapted to maintain a safe distance from the ground. For example, when the vehicle 1000 is a heavy truck, H2=700mm, L3=600mm, H4=100mm, and H1≥300mm. Certainly, the type of the vehicle 1000 is not limited thereto, and the vehicle 1000 may also be another type of vehicle that needs to be powered on. Details are omitted herein.

The following describes a vehicle 1000 and a battery swapping method for the vehicle 1000 according to a specific embodiment of the present disclosure.

Referring to FIG. 1 to FIG. 13, a plurality of batteries 1 are mounted on the vehicle-bottom longitudinal beam 200 of the vehicle 1000 and arranged along the length direction of the vehicle-bottom longitudinal beam 200. Each battery 1 can be detached separately relative to the vehicle-bottom longitudinal beam 200. Each battery is the first battery 11. A recess 10 is formed at the top of the battery 1 and accommodates the vehicle-bottom longitudinal beam 200. In this way, the battery 1 can utilize the space at two transverse sides of the vehicle-bottom longitudinal beam 200 and the space below the vehicle-bottom longitudinal beam 200 to ensure the energy density of the battery 1 and increase the height of the battery 1 above the ground.

Two battery layers 2 are arranged in parts of the battery 1 located at the two transverse sides of the vehicle-bottom longitudinal beam 200, respectively. Each battery layer 2 includes a plurality of battery units 3 arranged in parallel, and each battery unit 3 includes a plurality of battery cells 4 arranged in parallel, so that the spaces at the two transverse sides of the vehicle-bottom longitudinal beam 200 are fully and effectively utilized. One battery layer 2 is arranged in a part of the battery 1 located below the vehicle-bottom longitudinal beam 200. The battery layer 2 includes a plurality of battery units 3 arranged in parallel. Each battery unit 3 includes a plurality of battery cells 4 arranged in parallel. Therefore, while the space underneath the vehicle-bottom longitudinal beam 200 is fully utilized, a sufficient space between the bottom surface of the battery 1 and the ground can be effectively ensured. In this way, on the one hand, scraping between the bottom surface of the battery 1 and the protrusion of ground can be avoided, and the battery 1 can be effectively protected. On the other hand, sufficient space can be reserved for the battery swapping, so that without the need for digging a trench at the battery swapping station 2000 and lifting the vehicle 1000, the battery swapping can be realized, the site arrangement of the battery swapping station 2000 is simplified, and the space utilization rate is improved.

Specifically, the mounting structure 6 is disposed at each of the two transverse side walls 10b of the recess 10. Each mounting structure 6 includes two to three sub-mounting portions 61 arranged at intervals in the longitudinal direction. The connection structure 300 is arranged at a position of each of two transverse side surfaces of the vehicle-bottom longitudinal beam 200 corresponding to each mounting structure 6. One of the sub-mounting portions 61 and the connection structure 300 is a mounting pin, the other one of the sub-mounting portions 61 and the connection structure 300 is a battery swapping lock. When the battery 1 is replaced, the battery 1 is pushed upwards, and the mounting pin is sandwiched into the battery swapping lock, so that the mounting of the battery 1 to the vehicle-bottom longitudinal beam 200 can be completed. Since the plurality of batteries 1 are mounted on the vehicle-bottom longitudinal beam 200, the dimension of each battery 1 is small, which not only can improve the mounting reliability of each battery 1, but is also beneficial to the battery swapping design of each battery 1.

When the battery in the related art is mounted to the vehicle, the battery pack is pre-mounted on the battery swapping frame, and then the whole battery swapping frame is fixed to a vehicle chassis. Such a mounting mode mainly has the following problems.

First, since the battery pack is pre-mounted on the battery swapping frame, the whole battery swapping unit will be large and heavy, and the battery swapping station matched with the battery swapping unit needs to be trenched or lift the vehicle. Moreover, the battery-swapping transport vehicle designed in a matched manner needs to be made larger, more load-bearing, complex in design, and high in cost.

For the battery 1 according to the embodiments of the present disclosure, since the battery 1 can be mounted on the vehicle-bottom longitudinal beam 200 through the mounting structure 6 of the battery 1 itself, the battery swapping frame can be omitted, which lowers the battery swapping cost and improves the battery swapping efficiency. Moreover, the height of the battery 1 above the ground can be increased, eliminating the need to lift the entire vehicle or dig a trench for the passage of the matched battery-swapping transport vehicle, thereby lowering the site configuration difficulty of the battery swapping station 2000. Moreover, the design difficulty of the matched battery-swapping transport vehicle can also be lowered, and the cost is lowered.

Second, battery-swapping locking-attachment points on the battery swapping frame are each located at an outer peripheral wall of the battery swapping frame, and a span between a plurality of battery-swapping locking-attachment points is large, so that a deviation between the plurality of battery-swapping locking-attachment points is also large. Therefore, a locking-attachment time is lengthened during battery swapping, and a battery-swapping locking-attachment success rate is reduced, so that the battery swapping efficiency is limited. Moreover, a torque borne by the battery-swapping locking-attachment point is large, which has extremely high requirements for a strength of a quick-change lock, and the mounting reliability of the battery is low.

For the battery 1 according to the embodiments of the present disclosure, since the battery 1 can be mounted on the vehicle-bottom longitudinal beam 200 through the mounting structure 6 of the battery 1 itself, and since the mounting structure 6 faces towards the vehicle-bottom longitudinal beam 200, the deviation between the locking-attachment points can be reduced, so that the locking-attachment time is shortened during battery swapping, and the battery-swapping locking-attachment success rate is improved. Therefore, the battery swapping efficiency is improved. Moreover, the torque borne by the mounting structure 6 is small, and the mounting reliability of the battery 1 is high, which has low requirements for the strength of the mounting pin and the battery swapping lock.

Third, because the battery pack is formed integrally as an integral pack, a larger battery swapping frame is required to bear the stress. Therefore, a space occupied by the battery swapping frame is also larger, which causes an electric quantity of the battery pack to not be made large, thereby limiting a distance between the battery swapping stations, increasing the number of battery swapping stations, and improving the costs.

For the battery 1 according to the embodiments of the present disclosure, since the battery 1 can be mounted on the vehicle-bottom longitudinal beam 200 through the mounting structure 6 of the battery 1 itself, the battery swapping frame is omitted. Moreover, a plurality of batteries 1 are provided, so that the electric quantity may be large, which shortens the distance between the battery swapping station 2000 and the battery swapping station 2000, reduces the number of battery swapping stations 2000, and lowers the cost.

Fourth, only one battery pack can be matched for one vehicle model, and only a single battery pack can be matched for different application scenes, so that the battery swapping flexibility degree is low, and the compatibility is poor.

For the battery 1 according to the embodiments of the present disclosure, the plurality of batteries 1 are provided and separately and detachably mounted to the vehicle-bottom longitudinal beam 200. In this way, the compatibility can be obviously improved, and the battery swapping flexibility is obviously improved. Moreover, the adaptability and throughput of the battery swapping station 2000 can be increased, the number of battery swapping stations 2000 is reduced, the distance between the battery swapping stations 2000 is reduced, and the input cost is lowered.

It should be noted that embodiments of the present disclosure and features disclosed in the embodiments of the present disclosure can be combined with each other without conflicting.

While preferred embodiments of the present disclosure have been described above, the present disclosure is not limited thereto. For those skilled in the art, various changes and modifications can be made to the present disclosure. Any modification, equivalent replacement, improvement, etc., made within the spirit and principle of the present disclosure shall fall within the scope of the present disclosure.

## Claims

1. A battery assembly, comprising a plurality of batteries, each of the plurality of batteries having a mounting structure, wherein each of the plurality of batteries is adapted to be disposed at a bottom of a vehicle and detachably connected to the vehicle through the mounting structure, allowing each of the plurality of batteries to be detachably mounted to the vehicle separately.

2. The battery assembly according to claim 1, wherein at least one of the plurality of batteries is a first battery comprising two first portions, the two first portions being adapted to be respectively disposed at two transverse sides of a vehicle-bottom longitudinal beam of the vehicle, each of the two first portions having a top surface higher than a bottom surface of the vehicle-bottom longitudinal beam and comprising at least one first battery cell.

3. The battery assembly according to claim 2, wherein:
a top surface of the at least one first battery cell accommodated in each of the two first portions is adapted to be higher than a height center of the vehicle-bottom longitudinal beam; and/or
a top wall of each of the two first portions is adapted to be lower than a top surface of the vehicle-bottom longitudinal beam.

4. The battery assembly according to claim 2, wherein the mounting structure comprises a first mounting structure disposed at each of the two first portions, the first mounting structure being located between the first portion and an outer side surface of the vehicle-bottom longitudinal beam.

5. The battery assembly according to claim 4, wherein the first mounting structure comprises a plurality of sub-mounting portions arranged at intervals in a longitudinal direction.

6. The battery assembly according to any one of claims 2 to 5, wherein a longitudinal dimension L4 of each of the two first portions is smaller than a transverse dimension L5 of the first battery.

7. The battery assembly according to any one of claims 2 to 6, wherein the two first portions are symmetrically arranged.

8. The battery assembly according to any one of claims 2 to 7, wherein each of the two first portions comprises one first battery layer or a plurality of first battery layers arranged in a vertical direction, the one first battery layer or each of the plurality of first battery layers comprising a plurality of first battery units arranged in parallel, and each of the plurality of first battery units comprising the at least one first battery cell.

9. The battery assembly according to any one of claims 2 to 7, wherein the first battery further comprises a second portion connected to the two first portions, a top surface of the second portion being lower than the top surface of each of the two first portions to define a recess between the first portion and the two second portions, the recess being adapted to accommodate the vehicle-bottom longitudinal beam.

10. The battery assembly according to claim 9, wherein:
the top surface of the second portion is adapted to be lower than the vehicle-bottom longitudinal beam; and
the top surface of the second portion has a first docking structure, the first docking structure being adapted to be extended between two longitudinal beams of the vehicle-bottom longitudinal beam, and the first docking structure being configured to dock with the vehicle to allow for current conduction and/or liquid conduction.

11. The battery assembly according to claim 10, wherein:
a docking surface of the first docking structure faces upwards to allow for docking in a vertical direction; or
a docking surface of the first docking structure faces horizontally to allow for docking in a horizontal direction.

12. The battery assembly according to claim 10 or 11, wherein the first docking structure is located at a longitudinal central position of the first battery.

13. The battery assembly according to any one of claims 9 to 12, wherein the second portion further comprises at least one first battery cell.

14. The battery assembly according to claim 13, wherein the second portion comprises one first battery layer or a plurality of first battery layers arranged in a vertical direction, the one first battery layer or each of the plurality of first battery layers comprising a plurality of first battery units arranged in parallel, and each of the plurality of first battery units comprising the at least one first battery cell.

15. The battery assembly according to claim 14, wherein:
each of the two first portions further comprises one first battery layer or a plurality of first battery layers arranged in the vertical direction; and
a total height H4 of the at least one first battery cell accommodated in the first portion is greater than a total height H3 of the at least one first battery cell accommodated in the second portion.

16. The battery assembly according to any one of claims 2 to 15, wherein each of at least two batteries of the plurality of batteries is the first battery, all the first batteries being adapted to be sequentially arranged in a longitudinal direction of the vehicle.

17. The battery assembly according to claim 16, wherein an avoidance gap is defined between two adjacent ones of the first batteries.

18. The battery assembly according to claim 16 or 17, wherein:
each of the first batteries has the same specification; or
at least two of the first batteries have different specifications.

19. The battery assembly according to any one of claims 1 to 18, wherein at least one of the plurality of batteries is a second battery, the second battery being adapted to be located at a single transverse side of the vehicle-bottom longitudinal beam, and the second battery having a top surface higher than a bottom surface of the vehicle-bottom longitudinal beam and comprising at least one second battery cell.

20. The battery assembly according to claim 19, wherein the mounting structure comprises a second mounting structure disposed at the second battery, the second mounting structure being located between the second battery and an outer side surface of the vehicle-bottom longitudinal beam.

21. The battery assembly according to claim 19 or 20, wherein the second battery comprises one second battery layer or a plurality of second battery layers arranged in a vertical direction, the one second battery layer or each of the plurality of second battery layers comprising a plurality of second battery units arranged in parallel, and each of the plurality of second battery units comprising the at least one second battery cell.

22. The battery assembly according to any one of claims 1 to 21, wherein at least one of the plurality of batteries is a third battery comprising a third portion and a fourth portion, each of the third portion and the fourth portion comprising at least one third battery cell, wherein:
one fourth portion is provided and disposed at a transverse side of the third portion;
a top surface of the fourth portion is higher than a top surface of the third portion;
the top surface of the third portion is adapted to be lower than a bottom surface of the vehicle-bottom longitudinal beam;
the third portion is adapted to be located below the vehicle-bottom longitudinal beam of the vehicle;
the fourth portion is adapted to be located at a single transverse side of the vehicle-bottom longitudinal beam; and
the top surface of the fourth portion is adapted to be higher than the bottom surface of the vehicle-bottom longitudinal beam.

23. The battery assembly according to claim 22, wherein the mounting structure comprises a third mounting structure disposed at the third portion and/or the fourth portion, the third mounting structure being located between the third battery and the vehicle-bottom longitudinal beam.

24. The battery assembly according to claim 22 or 23, wherein the third portion has a second docking structure disposed at the top surface of the third portion, the second docking structure being adapted to be extended between two longitudinal beams of the vehicle-bottom longitudinal beam, and the second docking structure being configured to dock with the vehicle to allow for current conduction and/or liquid conduction.

25. The battery assembly according to any one of claims 22 to 24, wherein:
each of the third portion and the fourth portion comprises one third battery layer or a plurality of third battery layers arranged in a vertical direction, the one third battery layer or each of the plurality of third battery layers comprising a plurality of third battery units arranged in parallel, each of the plurality of third battery units comprising the at least one third battery cell; and
a total height H6 of the at least one third battery cell accommodated in the fourth portion is greater than a total height H5 of the at least one third battery cell accommodated in the third portion.

26. The battery assembly according to any one of claims 1 to 25, wherein at least two batteries of the plurality of batteries are different in at least one of capacitance, shape, and dimension.

27. The battery assembly according to any one of claims 1 to 25, wherein each of the plurality of batteries has a same specification.

28. The battery assembly according to any one of claims 1 to 27, wherein the plurality of batteries is connected in series and/or in parallel.

29. The battery assembly according to any one of claims 1 to 28, wherein each of the plurality of batteries has an electrically conductive connector adapted to be in current conduction with the vehicle or with an adjacent one of the plurality of batteries.

30. The battery assembly according to claim 29, wherein the electrically conductive connector is located at a top surface of each of the plurality of batteries and has a docking surface facing upwards.

31. The battery assembly according to any one of claims 1 to 30, wherein each of the plurality of batteries has a fluid conduction connector adapted to be in fluid conduction with the vehicle or with an adjacent one of the plurality of batteries.

32. The battery assembly according to claim 31, wherein the fluid conduction connector is located at a top surface of each of the plurality of batteries and has a docking surface facing upwards.

33. The battery assembly according to any one of claims 1 to 32, wherein:
the mounting structure is adapted to be detachably mounted at a vehicle-bottom longitudinal beam of the vehicle; and
the mounting structure is located at a side of each of the plurality of batteries facing towards the vehicle-bottom longitudinal beam.

34. The battery assembly according to any one of claims 1 to 33, wherein:
at least two batteries of the plurality of batteries are arranged in a longitudinal direction of the vehicle-bottom longitudinal beam; and/or
at least two batteries of the plurality of batteries are respectively disposed at two transverse sides of the vehicle-bottom longitudinal beam.

35. A vehicle, comprising the battery assembly according to any one of claims 1 to 34.

36. A battery swapping station, configured to replace a battery for the vehicle according to claim 35.

37. The battery swapping station according to claim 36, comprising a battery swapping region, the vehicle being adapted to replace the battery in the battery swapping region, the battery swapping region comprising a first region and a second region, the first region being adapted to be located directly below the battery, the second region being configured to support a front wheel and a rear wheel that are adjacent to the battery, and a ground at the first region being flush with a ground at the second region.
